# EUROPEAN PATENT APPLICATION

(11) **EP 4 790 085 A1**
(43) Date of publication of application: **12.08.2026**
(21) Application number: 24876441.7
(22) Date of filing: 29.09.2024
(51) Int. Cl.: C08J 11/00, C08K 7/02, H05H 1/46

(54) **CARBON FIBER AGGREGATE, AND PREPARATION METHOD THEREFOR AND USE THEREOF**

(30) Priority: 08.10.2023 CN 202311291968; 08.10.2023 CN 202311294980; 08.10.2023 CN 202311294946; 08.10.2023 CN 202311295199
(71) Applicant: CHINA PETROLEUM & CHEMICAL CORPORATION, Chaoyang District Beijing 100728 (CN); Sinopec (Beijing) Research Institute of Chemical Industry Co., Ltd., Beijing 100013 (CN)
(72) Inventor: ZHANG, Liangdong, Beijing 100013 (CN); LIU, Wenlu, Beijing 100013 (CN); JIANG, Haibin, Beijing 100013 (CN); RU, Yue, Beijing 100013 (CN); QI, Guicun, Beijing 100013 (CN); JIANG, Chao, Beijing 100013 (CN); WANG, Xiang, Beijing 100013 (CN); KONG, Dehui, Beijing 100013 (CN); ZHANG, Xiaohong, Beijing 100013 (CN); QIAO, Jinliang, Beijing 100013 (CN)
(74) Representative: Hoffmann Eitle
(86) International application number: PCT/CN2024/122303
(87) International publication number: WO 2025/077625

(57) **Abstract**

A carbon fiber assembly, and a preparation method therefor and a use thereof. The carbon fiber assembly comprises a plurality of carbon fiber basic units which are arranged in a non-oriented manner, wherein the carbon fiber basic units comprise a carbon fiber bundle formed by a plurality of carbon fibers and optionally single carbon fibers; the carbon fiber bundle is a carbon fiber tow that is fixed together; at least one fixed node is arranged on the carbon fiber tow; taking the two ends of each carbon fiber in the length direction as carbon fiber ends, the number of carbon fiber ends contained in each gram of the carbon fiber assembly is greater than or equal to 1×10⁶ in terms of the number of carbon fiber ends. The carbon fiber assembly can be used for microwave heating pyrolysis of an organic material in a microwave field, and preparation of syngas using carbon dioxide in a microwave field; the organic material includes one or more of plastics, biomass, and volatile organic compounds.

## Description

### Technical Field

The present invention relates to the technical field of new material preparation, and in particular, to a carbon fiber assembly, a preparation method therefor and a use thereof.

### Background Art

Extreme climate and energy crisis are two major challenges that humanity needs to face in this century. As we all know, carbon dioxide is the primary greenhouse gas, and the occurrence of global extreme climate is mainly affected by the rise in global carbon dioxide emissions. Therefore, the treatment of carbon dioxide has become an issue that the whole society needs to pay attention to and solve. The utilization methods of carbon dioxide can be divided into four categories: chemical synthesis, fuel production, biological application, and direct application. At present, the global annual total carbon dioxide emissions are about 35 billion tons per year. However, the total carbon dioxide consumption of the chemical industry, which is the largest consumer of carbon dioxide, is only about 220 million tons per year, which is a mere fraction of the global total carbon dioxide emissions. Therefore, only by converting carbon dioxide into energy fuels can the consumption of carbon dioxide match its emissions. Among the current methods for converting carbon dioxide into energy fuels, the technology of reacting carbon dioxide with water to produce syngas has attracted the most attention. The reasons are that syngas is a traditional fuel energy source, water resources are easily available, and syngas is also an important chemical energy storage medium.

More than 90% of chemical raw materials are derived from fossil energy sources such as petroleum, shale gas, and coal. The current shortage of fossil energy and the environmental problems caused by the use of fossil fuels have made the development of environmentally friendly renewable energy one of the hotspots in the current energy field. For the more sustainable development of the economy and society, there is an urgent need to replace fossil energy with renewable biomass energy. Straw is a common agricultural solid waste in rural China, featuring wide distribution and large resource reserves. According to a report by the United Nations Environment Programme (UNEP), various grains grown worldwide can provide 1.7 billion tons of straw annually, and the total output of various crop straws in China exceeds 700 million tons, which is a huge renewable energy resource. The rapid development of pyrolysis technology in recent years has made it one of the more efficient and mature technologies in biomass utilization. However, numerous studies have found that because biomass contains large amounts of aromatic hydrocarbons and their derivatives, these substances form significant quantities of tar and coke at high temperatures. This results in the need for extensive decoking of reaction vessels. If the tar in the pyrolysis products is not treated and is carried through pipelines, it will gradually cool down to form a viscous liquid that adheres to the pipelines, causing a series of issues such as corrosion, scaling, and blockage that threaten the safety of pipelines and devices.

Polyolefin materials refer to thermoplastic polymer materials polymerized from ethylene, propylene, butene, α-olefins, etc., including polyethylene (PE), polypropylene (PP), ethylene-vinyl acetate copolymer (EVA), etc., which are commonly used in people's lives. At present, the global total output of polyolefins exceeds 220 million tons per year, which is widely used in the fields of medical and health care, agriculture, transportation, electronic and electrical appliances, construction and home furnishing, energy conservation and environmental protection, new energy, etc., and is the world's largest and most widely used polymer material. China is the world's largest producer and consumer of polyolefins. In 2020, the total production capacity reached 53 million tons per year, and the total consumption exceeded 66 million tons per year. However, due to the carbon-carbon bonds in the main chain of polyolefins with good chemical stability, polyolefins are not easily degraded in the natural environment, and even difficult to decompose and treat under strong acid and strong alkali conditions. This also makes waste polyolefins an important source of environmental pollution, usually known as white pollution. Although polyolefins can be recycled through thermoplastic processing, the addition and use of additives in the recycling process will make it impossible for polyolefins to be permanently recycled through physical recycling. Ultimately, chemical recycling methods are needed to treat polyolefins into chemical raw materials or fuels. High-temperature pyrolysis is the most effective method for treating waste polyolefin materials, but it is easy to form tar and carbon deposition during the high-temperature pyrolysis process. This will reduce the heat transfer efficiency of the pyrolysis furnace. If the tar in the pyrolysis products is not treated and is carried through pipelines, it will gradually cool down to form a viscous liquid that adheres to the pipelines, causing a series of issues such as corrosion, scaling, and blockage that threaten the safety of pipelines and devices.

VOCs (Volatile Organic Compounds) refer to a class of organic compounds with a boiling point in the range of 50~260°C under standard atmospheric pressure. They mainly come from oil refineries, chemical industry, fuel combustion, pharmaceutical factories, automobile industry, textile manufacturers, solvent processes, cleaning products, printing presses, insulation materials, and office supplies, etc. VOCs are toxic and carcinogenic, which not only damage the environment but also react with other atmospheric pollutants (such as NOₓ, SOₓ, etc.) to form photochemical smog, thereby damaging the ozone layer. Long-term exposure to VOCs environment poses a threat to human health and causes irreversible damage. With the acceleration of industrialization, the annual emissions of VOCs have increased sharply. According to statistics, the VOCs emissions in 2019 were about 23.4 Tg. If the existing control level remains unchanged, due to the rapid economic development, the total anthropogenic VOCs emissions in China in 2025 are expected to increase by 23% compared with 2019. To reduce the harmful effects of VOCs on the environment and humans, China has implemented strict regulations to restrict the further emission of VOCs. These regulations include requirements for the monitoring, control, and treatment of VOCs emission sources. In addition, the treatment technology of VOCs is also an important way to eliminate pollution, which has attracted widespread attention.

At present, the composition of VOCs in industrial production processes is extremely complex. According to research, the main hydrocarbon VOCs components are: 2-methylpentane, hydrogen, n-hexane, 2,2,4-trimethylpentane, n-heptane, 2,3,4-trimethylpentane, methylcyclohexane, n-octane, n-nonane, n-decane, propane, isobutane, isobutene, n-butane, cyclopentane, isopentane, n-pentane, ethane, n-undecane, n-dodecane, methylcyclopentane, 3-methylpentane, 3-methylhexane, 2-methylhexane, 2,4-dimethylpentane, 2,2-dimethylbutane, 2,3-dimethylbutane, cyclohexane, 2-methylheptane, 3-methylheptane, 2,3-dimethylpentane, propylene, trans-2-butene, 1-butene, cis-2-butene, 1-pentene, cis-2-pentene, ethylene, acetylene, benzene, ethylbenzene, o-xylene, m-xylene, p-xylene, methane, toluene, m-ethyltoluene, p-ethyltoluene, o-ethyltoluene, styrene, cumene, n-propylbenzene, 1,3,5-trimethylbenzene, 1,2,4-trimethylbenzene, 1,2,3-trimethylbenzene, m-diethylbenzene, p-diethylbenzene, acetone, 1,3-butadiene, carbon monoxide, etc.

Although these VOCs components contain many chemical raw materials, the overly complex component combination makes it difficult for petrochemical enterprises to effectively utilize them through gas separation. Therefore, at this stage, petrochemical enterprises mainly adopt the combustion method to treat VOCs, that is, adding combustible gas to VOCs for sufficient combustion. However, this method has an important problem, that is, combustion produces carbon dioxide. Carbon dioxide is a greenhouse gas that can absorb heat from the Earth's surface and cause gradual warming, leading to global climate change. Therefore, when petrochemical enterprises use the combustion method to treat VOCs, this will increase the enterprise's carbon emissions and have an adverse impact on global climate change. In addition, petrochemical enterprises also emit carbon dioxide during the production process. These emissions mainly come from links such as petroleum processing, petrochemical production, and energy consumption. Therefore, in order to reduce carbon dioxide emissions, we hope to design a technical method that can treat both VOCs and carbon dioxide simultaneously.

Plasma is the fourth state of matter besides solid, liquid, and gas, characterized by a high dependence of the plasma state on electromagnetic fields. The material composition of plasma includes unbound ions and free electrons, and the overall plasma state is electrically neutral. Microwaves refer to electromagnetic waves with wavelengths between infrared rays and ultra-high frequency (UHF) radio waves, which have very strong penetration ability. Their wavelengths range from 1 m to 1 mm, corresponding to frequencies of 300 GHz to 300 MHz. Microwave plasma technology is a technology for generating plasma through microwave irradiation, which can achieve an energy conversion efficiency of more than 60% under the non-equilibrium state of plasma.

Microwave plasma has a significant thermal effect. Chinese Patent Application No. CN111099917A and Chinese Patent Application No. CN112823441A disclose that the prepared porous composite materials can generate a high temperature of above 1000°C through microwave irradiation in an inert atmosphere. However, the porous composite materials prepared in Chinese Patent Application No. CN111099917A and Chinese Patent Application No. CN112823441A are all rigid structural materials, which have the characteristics of high brittleness and easy damage, and are not conducive to long-term use.

Chinese Patent No. CN111099943A discloses that the prepared porous composite material can generate a high temperature of above 1000°C through microwave irradiation in a nitrogen atmosphere, thereby rapidly pyrolyzing biomass. However, the porous composite material prepared in this patent is a rigid structural material, which has the characteristics of high brittleness and easy damage, is not conducive to long-term use, and cannot solve the problem of a large amount of tar and coke generated during biomass pyrolysis.

Chinese Patent No. CN111100661A discloses that the prepared porous composite material can generate a high temperature of above 1000°C through microwave irradiation in a nitrogen atmosphere, thereby rapidly pyrolyzing polyolefins. However, the porous composite material prepared in this patent is a rigid structural material, which has the characteristics of high brittleness and easy damage, is not conducive to long-term use, and cannot solve the problem of a large amount of tar and coke generated during polyolefin pyrolysis. Studies have found that carbon dioxide can react with coke and tar at microwave high temperatures to be converted into carbon monoxide. Therefore, if a microwave heating material that is not easily damaged and can generate plasma in a microwave field containing carbon dioxide atmosphere is designed and synthesized, it can reduce the coke and tar generated during biomass pyrolysis, improve the utilization rate of biomass microwave pyrolysis, and simultaneously recycle carbon dioxide, achieving the simultaneous and efficient recycling of carbon dioxide and biomass, which has a wide application market.

In addition, studies have found that carbon dioxide can react with coke and tar at microwave high temperatures to be converted into carbon monoxide. Therefore, if a microwave heating material that is not easily damaged and can generate plasma in a microwave field containing carbon dioxide atmosphere is designed and synthesized, it can reduce the coke and tar generated during polyolefin pyrolysis, improve the utilization rate of polyolefin microwave pyrolysis, and simultaneously recycle carbon dioxide, achieving the simultaneous and efficient recycling of carbon dioxide and polyolefins, which has a wide application market.

Furthermore, studies have found that VOCs can be pyrolyzed into methane, ethylene, hydrogen, and amorphous carbon under the action of microwave plasma at a high temperature of more than 1000°C, and amorphous carbon can react with carbon dioxide at a high temperature of 1000°C to generate carbon monoxide. Methane, carbon monoxide, and hydrogen are important energy fuels, ethylene can be used to produce polyethylene, and hydrogen and carbon monoxide can be used to prepare alkanes through Fischer-Tropsch synthesis. Therefore, the technology for simultaneously converting VOCs and carbon dioxide into methane, ethylene, carbon monoxide, and hydrogen has extremely high economic value and application market.

Therefore, how to provide a new type of material that can generate a high temperature of above 1000°C in microwaves and can overcome the problems of high brittleness and easy damage of existing porous composite materials is the research direction of the present invention. In addition, how to use the above material to realize the recycling of carbon dioxide through microwave heating, and even the simultaneous recycling of carbon dioxide and organic materials such as biomass, plastics, and VOCs, is also the research direction of the present invention.

### Contents of the Invention

Carbon fiber is a material with both high strength and flexibility. The tensile strength of ordinary carbon fibers, such as T300 carbon fiber monofilaments, can reach 3500 MPa, and the tensile modulus can reach 230 GPa. In terms of physical properties, although it can solve the problems of high brittleness and easy damage, since carbon fiber can both absorb and reflect microwaves, weaving carbon fibers only produces a microwave-reflective material. Such practical application indicates that carbon fiber is more inclined to reflect microwaves. At present, there is no precedent for using pure carbon fiber as a microwave heating material, such as generating plasma through microwave irradiation. Through research, the inventors of the present invention have unexpectedly found that a carbon fiber assembly can be obtained by controlling the number of carbon fiber ends contained in each gram of the carbon fiber assembly. Although the carbon fiber assembly is pure carbon fiber, it can generate plasma and a high temperature of more than 1000°C under microwave irradiation.

Based on the above findings, the objective of the present invention is to provide carbon fiber assembly, a preparation method therefor and a use thereof as well as a method for the preparation of syngas using carbon dioxide.

To solve the problems existing in the prior art, the present invention provides a method for the simultaneous recycling of biomass and carbon dioxide using microwaves. The present invention uses a carbon fiber assembly that can generate high temperature and plasma in a microwave field in the atmosphere of a carbon dioxide-containing gas to efficiently pyrolyze biomass, while utilizing the characteristic that coke and tar generated from biomass react with carbon dioxide to convert into carbon monoxide under microwave plasma and high temperature, biomass and carbon dioxide are simultaneously and efficiently converted into syngas with carbon monoxide as the main component.

Furthermore, the present invention provides a method for the simultaneous recycling of polyolefins and carbon dioxide using microwaves. The present invention uses a carbon fiber assembly that can generate high temperature and plasma in a microwave field in the atmosphere of a carbon dioxide-containing gas to efficiently pyrolyze polyolefins, while utilizing the characteristic that coke and tar generated from polyolefins react with carbon dioxide to convert into carbon monoxide under microwave plasma and high temperature, polyolefins and carbon dioxide are simultaneously and efficiently converted into syngas with carbon monoxide as the main component.

In addition, the present invention provides a method for the simultaneous recycling of VOCs and carbon dioxide using microwaves. The present invention uses a carbon fiber assembly that can generate high temperature and plasma in a microwave field in the atmosphere of a carbon dioxide-containing gas to efficiently pyrolyze VOCs into methane, ethylene, hydrogen and amorphous carbon, while amorphous carbon and carbon dioxide can be further converted into carbon monoxide at high temperature, thereby realizing the simultaneous and efficient recycling of VOCs and carbon dioxide.

A first aspect of the present invention is to provide a carbon fiber assembly, which comprises a plurality of carbon fiber basic units arranged in a non-oriented manner, wherein the carbon fiber basic units comprise a carbon fiber bundle formed by a plurality of carbon fibers and optionally single carbon fibers; the carbon fiber bundle is a carbon fiber tow that is fixed together; at least one fixed node is arranged on the carbon fiber tow;
taking the two ends of each carbon fiber in the length direction as carbon fiber ends, the number of carbon fiber ends contained in each gram of the carbon fiber assembly is greater than or equal to 1×10⁶ in terms of the number of carbon fiber ends.

In a preferred embodiment of the present invention, the carbon fiber basic units are the carbon fiber bundle formed by a plurality of carbon fibers and optionally single carbon fibers, that is, the carbon fiber basic units are either the carbon fiber bundle formed by a plurality of carbon fibers, or a combination of the carbon fiber bundle formed by a plurality of carbon fibers and single carbon fibers.

In a preferred embodiment of the present invention, the carbon fiber assembly presents a two-dimensional or three-dimensional spatial structure.

In a preferred embodiment of the present invention, at least part of two or more adjacent carbon fiber basic units are in contact with each other; preferably, the contact includes at least one of adjacency, overlapping and interpenetration with each other.

In a preferred embodiment of the present invention, the number of carbon fiber ends contained in each gram of the carbon fiber assembly is 1×10⁶ to 6×10⁸, preferably 1×10⁶ to 6×10⁷, more preferably 1×10⁶ to 2×10⁷ in terms of the number of carbon fiber ends.

In a preferred embodiment of the present invention,
when there is only one fixed node on the carbon fiber tow, the length of the carbon fiber tow is 0.1 to 30 mm, preferably 1 to 20 mm, more preferably 3 to 20 mm;
when there are two or more fixed nodes on the carbon fiber tow, the distance between adjacent fixed nodes is 1 to 50 mm, preferably 2 to 30 mm, more preferably 5 to 20 mm; and a part of the carbon fiber tow between adjacent fixed nodes is in a broken state.

In a preferred embodiment of the present invention, the fixing includes binding and/or knotting, and the fixed nodes include bound nodes and/or knotted nodes; more preferably, the knotting is performed by knotting the carbon fiber tow itself; and/or the binding material for binding is carbon fiber tow.

The raw materials selected for the carbon fiber assembly of the present invention are commercially available. According to the present invention, the carbon fiber tow can be various types of carbon fiber tows in the prior art. In a preferred embodiment of the present invention, the carbon fiber tow, the carbon fiber tow for binding, and the carbon fiber tow for knotting are independently selected from at least one of the following types of carbon fiber tows: T300, T700, T800, T1000, T1100, M40, M50, M60; preferably selected from at least one of the following types of carbon fiber tows: T300, T700, T800; more preferably selected from at least one of the following types of carbon fiber tows: T300, T700.

According to the present invention, there are various options for the number of carbon fibers contained in each carbon fiber tow. In a preferred embodiment of the present invention, the number of carbon fibers contained in each carbon fiber tow is 1K to 48K, preferably 1K, 3K, 6K, 12K, 24K, 48K; more preferably 12K, 24K, most preferably 12K.

According to the present invention, the carbon fiber bundle is prepared by processing (e.g., fixing, partially breaking) carbon fiber tow (e.g., commercially available), so the carbon fiber tow can be regarded as a precursor of the carbon fiber bundle.

According to the present invention, the carbon fiber assembly comprises a plurality of carbon fiber basic units arranged in a non-oriented manner, and the carbon fiber basic units are single carbon fibers and/or the carbon fiber bundle formed by a plurality of carbon fibers. In a preferred embodiment of the present invention, the carbon fiber basic units are the carbon fiber bundle formed by a plurality of carbon fibers, or the carbon fiber basic units include both single carbon fibers and carbon fiber bundle. In this more preferred embodiment, the carbon fiber assembly is more convenient to use and recycle.

In a more preferred embodiment of the present invention, when the carbon fiber basic units include both single carbon fibers and carbon fiber bundle, based on the total mass of the carbon fiber assembly being 100 wt%, the content of carbon fiber bundle in the carbon fiber assembly is 0.1 to 99.9 wt%, preferably 1 to 99 wt%; and/or the length of each single carbon fiber is 0.1 to 30 mm, preferably 1 to 20 mm, more preferably 3 to 20 mm; and/or the diameter of the single carbon fiber is 5 to 10 µm, and/or the density is 1.5 to 2.0 g/cm³.

A second aspect of the present invention is to provide a preparation method of the carbon fiber assembly described in the first aspect, comprising:
assembling the carbon fiber bundle and optionally the single carbon fibers in a non-oriented arrangement to obtain the carbon fiber assembly; wherein the preparation method of the carbon fiber bundle includes fixing the carbon fiber tow together and arranging at least one fixed node on the carbon fiber tow, and when there are two or more fixed nodes on the carbon fiber tow, partially or completely breaking the carbon fiber tow between adjacent fixed nodes.

The term "assembling" refers to gathering dispersed carbon fiber basic units together with physical mixing rather than chemical bonding between them; for example, the assembly of carbon fiber basic units is achieved by stacking or coiling, thereby preferably achieving contact between at least part of two or more adjacent carbon fiber basic units, and more preferably, achieving contact between at least part of two or more adjacent carbon fiber basic units in at least one manner including adjacency, overlapping, interpenetration, etc.

In a preferred embodiment of the present invention, the fixing includes binding and/or knotting.

In a preferred embodiment of the present invention, the breaking includes cutting and/or shearing.

In a more preferred embodiment of the present invention, when there is only one fixed node on the carbon fiber tow, the length of the carbon fiber tow is 0.1-30 mm, preferably 1-20 mm, more preferably 3-20 mm.

In a more preferred embodiment of the present invention, when there are two or more fixed nodes on the carbon fiber tow, the distance between adjacent fixed nodes is 1-50 mm, preferably 2-30 mm, more preferably 5-20 mm.

The fixing includes binding and/or knotting, and the fixed nodes include bound nodes and/or knotted nodes; preferably, the knotting is performed by knotting the carbon fiber tow itself; and/or the binding is performed using carbon fiber tow; more preferably, the knotting method is at least one of single knot, flat knot, Bowline knot, Alpine butterfly connection knot, Alpine butterfly knot, double Alpine butterfly knot, Blake knot, clove knot, 8-shaped single knot, and 8-shaped connection knot; for the knotting method, at least one of single knot, flat knot, Alpine butterfly knot, Alpine butterfly connection knot, double Alpine butterfly knot, 8-shaped single knot, and 8-shaped connection knot is preferred; at least one of single knot, flat knot, Alpine butterfly knot, and 8-shaped single knot is more preferred.

The devices used in the preparation method of the present invention are all those commonly used.

The preparation method of the above carbon fiber assembly directly employs high-strength carbon fiber as a raw material, and through simple treatment, a flexible, high-temperature resistant material that can generate a high temperature of more than 1000°C in a microwave field can be prepared. It is featured with a simple and feasible process flow and easy realization of large-scale preparation.

A third aspect of the present invention is to provide a material for microwave irradiation heating, which comprises the carbon fiber assembly according to the first aspect or the carbon fiber assembly prepared by the preparation method according to the second aspect; preferably,
under microwave irradiation of 300 W or above, the temperature of the material for microwave irradiation heating can reach 1000 °C or higher.

The oxygen-free atmosphere includes an oxygen-free reaction gas and an optional protective atmosphere. The protective atmosphere includes, but is not limited to, nitrogen and/or inert gas atmosphere. The reaction gas is, for example, pure carbon dioxide, or a mixed gas of carbon dioxide and water vapor.

A fourth aspect of the present invention is to provide a use of the carbon fiber assembly according to the first aspect or the carbon fiber assembly prepared by the preparation method according to the second aspect as a heating material in a microwave field under microwave irradiation; preferably,
the power of the microwave irradiation is more than 300 W, preferably 300 to 2000 W, more preferably 500 to 1500 W, further preferably 700 to 1200 W; and/or the microwave irradiation is carried out in an oxygen-free atmosphere.

A fifth aspect of the present invention is to provide an application of the carbon fiber assembly according to the first aspect or the carbon fiber assembly prepared by the preparation method according to the second aspect in a microwave field, including microwave heating pyrolysis of an organic material and preparation of syngas using carbon dioxide in a microwave field; preferably, the organic material includes one or more of plastics, biomass, and volatile organic compounds.

A sixth aspect of the present invention is to provide a method for preparing syngas using carbon dioxide, comprising, in a microwave field and in the presence of the carbon fiber assembly according to the first aspect or the carbon fiber assembly prepared by the preparation method according to the second aspect or the material for microwave irradiation heating according to the third aspect:
carrying out Reaction 1: contacting the carbon fiber assembly, carbon dioxide and graphite to carry out the reaction to obtain carbon monoxide; or,
carrying out Reaction 2: contacting the carbon fiber assembly, carbon dioxide, water vapor and graphite to carry out the reaction to obtain carbon monoxide and hydrogen.

According to the present invention, by utilizing the thermal and catalytic effects of plasma generated by the carbon fiber assembly under microwave irradiation in the atmosphere of a carbon dioxide-containing gas, recycled carbon materials (e.g., graphite recovered from waste lithium batteries) can react with carbon dioxide and water vapor to convert into carbon monoxide and hydrogen, thereby preparing syngas. This realizes the conversion and utilization of carbon dioxide at the same time of treating waste carbon materials.

In a preferred embodiment of the present invention, for Reaction 1:
the mass ratio of the carbon fiber assembly to graphite is (100:1) to (1:100), preferably (20:1) to (1:20), and more preferably (10:1) to (1:10); and/or,
the microwave power is more than 300 W, preferably 300 to 2000 W, more preferably 500 to 1500 W, and further preferably 700 to 1200 W; and/or, the microwave irradiation time is 0.1 to 200 min, preferably 0.5 to 150 min, and most preferably 1 to 100 min.

In a preferred embodiment of the present invention, for Reaction 2:
the mass ratio of the carbon fiber assembly to graphite is (100:1) to (1:100), preferably (1:1) to (1:20), and more preferably (1:1) to (1:10); and/or,
the volume ratio of carbon dioxide to water vapor is (99.9:0.1) to (10:90), and further preferably (98:2) to (20:80); and/or,
the microwave power is more than 300 W, preferably 300 to 2000 W, more preferably 500 to 1500 W, and further preferably 700 to 1200 W; and/or, the microwave irradiation time is 0.1 to 200 min, preferably 0.5 to 150 min, and most preferably 1 to 100 min.

In a preferred embodiment of the present invention, the method for preparing syngas using carbon dioxide comprises the following steps:
a. placing a carbon fiber assembly and graphite in a sealable reaction vessel, wherein the reaction vessel is made of a microwave-transparent material;
b. introducing carbon dioxide into the reaction vessel, or introducing a mixed gas of carbon dioxide and water vapor into the reaction vessel;
c. activating the microwave, placing the reaction vessel in a microwave field to carry out the reaction to obtain a gaseous product, and collecting the gaseous product;
preferably,
the graphite is derived from waste graphite, and more preferably from graphite recovered from waste lithium batteries; and/or,
the atmosphere for microwave irradiation optionally further contains nitrogen and/or an inert gas, and preferably, the inert gas is selected from argon.

According to the present invention, the microwave-transparent reaction vessel refers to a vessel where microwave can penetrate through its wall and radiate onto the sample. The reaction vessel may be various vessels or pipelines prepared from materials (e.g., quartz, alumina, boron nitride) in the prior art that are microwave-transparent and resistant to high temperatures above 1000°C.

The microwave field in the method of the present invention can adopt various microwave devices in the prior art, such as household microwave ovens, industrial microwave devices (e.g., microwave pyrolysis reactors), and the like.

The collection of the gaseous product is a conventional method in the prior art, which is preferably carried out under an inert atmosphere. For example, where a microwave oven is used as the microwave field, the gas collection method is as follows: placing the quartz crucible carrying waste plastics and porous composite materials into a vacuum bag and sealing it in a nitrogen-protected glove box, unscrewing the crucible through the vacuum bag after the reaction under microwave, and sampling by inserting a syringe into the vacuum bag; where an industrial microwave oven with an air inlet and an air outlet (e.g., a microwave pyrolysis reactor) is used, the gas collection method is as follows: purging with nitrogen during the reaction, and sampling and collecting with a gas collection bag at the air outlet.

Through the above technical solution, the present invention provides a carbon fiber assembly and its preparation method and application as well as a method for preparing syngas using carbon dioxide. The carbon fiber assembly is a material consisting of a large number of carbon fiber ends assemblyd in a disordered arrangement, wherein plasma can be generated between the carbon fiber ends under microwave irradiation. In the present invention, a carbon fiber assembly is obtained by controlling the number of carbon fiber ends contained in each gram of the carbon fiber assembly. Although the carbon fiber assembly is pure carbon fiber, it can generate plasma and a high temperature of more than 1000°C under microwave irradiation. This overcomes the problems of high brittleness and easy damage of porous composite materials in the prior art. Moreover, the carbon fiber assembly of the present invention has simple raw materials, is easy to prepare, and has high popularization and application value.

Carbon monoxide and hydrogen are important chemical raw materials. By adopting the syngas preparation method of the present invention and using the carbon fiber assembly as a carbon fiber microwave heating material, it is possible to effectively convert carbon dioxide into carbon monoxide, or convert carbon dioxide and water into carbon monoxide and hydrogen, whereby realizing the resource utilization of carbon dioxide and recycling graphite from waste batteries, which possesses extremely high application value.

A seventh aspect of the present invention is to provide a method for simultaneously recycling biomass and carbon dioxide using microwave, comprising:
contacting the biomass with a carbon fiber assembly, applying microwave to the biomass and carbon fiber assembly in the atmosphere of a carbon dioxide-containing gas, and reacting the biomass and carbon dioxide to convert into a gaseous product with carbon monoxide as the main component;
the carbon fiber assembly is the carbon fiber assembly according to the first aspect or the carbon fiber assembly prepared by the preparation method according to the second aspect.

Through the above technical solution, the present invention brings a biomass into contact with a carbon fiber assembly, and applies microwave to the biomass and carbon fiber assembly in the atmosphere of a carbon dioxide-containing gas. The carbon fiber assembly generates high temperature and plasma in the microwave field in the atmosphere of a carbon dioxide-containing gas, and under the combined action of high temperature and plasma, the biomass and carbon dioxide are converted into gaseous products (i.e., syngas) with carbon monoxide as the main component.

In the present invention, the gaseous product with carbon monoxide as the main component refers to: in terms of volume content, with the total volume of the gaseous product being 100%, the content of carbon monoxide in the gaseous product is 20% or more, preferably 40% or more, and more preferably 50% or more.

According to the present invention, the weight ratio of the biomass to the carbon fiber assembly can be selected within a wide range. In a preferred embodiment of the present invention, the weight ratio of the biomass to the carbon fiber assembly is (1:100) to (100:1), preferably (1:50) to (50:1), and more preferably (1:20) to (20:1).

In a preferred embodiment of the present invention, the carbon dioxide-containing gas comprises pure carbon dioxide gas or a carbon dioxide-containing mixed gas; preferably, the carbon dioxide-containing mixed gas is a mixed gas of carbon dioxide with nitrogen and/or an inert gas and/or water vapor; more preferably, the inert gas is at least one of argon and helium.

In a preferred embodiment of the present invention, the volume fraction of carbon dioxide in the carbon dioxide-containing mixed gas is 5% to 99.9%, preferably 10% to 99.9%, and most preferably 20% to 99.9%.

According to the present invention, the power of the microwave can be selected within a wide range. In a preferred embodiment of the present invention, the power of the microwave is 1 W to 100 kW, preferably 200 W to 50 kW, and most preferably 500 W to 20 kW.

According to the present invention, the microwave irradiation time can be selected within a wide range. In a preferred embodiment of the present invention, the microwave irradiation time is 0.1 to 200 min, preferably 0.5 to 150 min, and most preferably 1 to 100 min.

In the present invention, the temperature of the carbon fiber assembly exceeds 1000°C, causing the pyrolysis of biomass.

The biomass can be brought into contact with the carbon fiber assembly by various means, as long as the biomass is in contact with the carbon fiber assembly. In a preferred embodiment of the present invention, the contact mode between the biomass and the carbon fiber assembly includes one or a combination of more than one of the following: placing the biomass on the carbon fiber assembly, placing the biomass in a cavity formed by the carbon fiber assembly, covering the biomass with the carbon fiber assembly, and blending the biomass with the carbon fiber assembly.

According to the present invention, the biomass can be selected within a wide range. In a preferred embodiment of the present invention, the biomass is various animals, plants and/or algae produced by photosynthesis, each containing cellulose, hemicellulose and lignin; preferably,
the biomass is at least one of straw, bagasse, branches, leaves, wood chips, rice husks, rice straw, peanut shells, coconut shells, palm seed shells, and corn cobs.

In a preferred embodiment of the present invention, the method comprises the following steps:
a. dehydrating the biomass;
b. placing the dehydrated biomass and the carbon fiber assembly in a sealable reaction vessel, wherein the reaction vessel is made of a microwave-transparent material;
c. introducing a carbon dioxide-containing gas into the reaction vessel to displace air;
d. activating the microwave, placing the reaction vessel in a microwave field to carry out the reaction, and collecting the gaseous product generated by the reaction.

The specific steps of the method for simultaneously recycling biomass and carbon dioxide using microwave are as follows:
a. dehydrating the biomass at 50°C to 200°C for 1 min to 240 min, where the dehydration device can be commercially available drying device, such as a blast dryer, a microwave oven, a thermal radiation meter, etc., or drying the biomass by sun drying, air drying, etc., such that the biomass does not produce a thermal weight loss of more than 1% within 10 min at 200°C;
b. placing the biomass and the carbon fiber assembly together in any mode to ensure that the biomass can contact the carbon fiber assembly;
c. introducing a carbon dioxide-containing gas into the reaction system to displace air;
d. activating the microwave and collecting the gaseous product generated by the reaction.

The microwave field in the method of the present invention can employ various microwave devices in the prior art, such as a household microwave oven, an industrial microwave device (e.g., a microwave pyrolysis reactor), and the like.

According to the present invention, a microwave-transparent material refers to that microwave can radiate to the sample through the wall of the reaction vessel made of the material.

In the method of the present invention, the device for placing or carrying the biomass and the carbon fiber assembly can be selected from various vessels or pipelines in the prior art that are microwave-penetrable and resistant to high temperatures above 1200°C, such as quartz crucibles, quartz reactors, quartz tubes, alumina crucibles, alumina reactors, alumina tubes, and the like.

In the method of the present invention, the biomass is gasified after pyrolysis, and the gas obtained after pyrolysis can be collected for subsequent treatment, such as being used as a fuel after gas separation or as a chemical industrial raw material for subsequent reaction and production.

The collection of the gaseous product is a conventional method in the prior art, which is preferably carried out under an inert atmosphere. For example, where a microwave oven is used as the microwave field, the gas collection method is as follows: placing the quartz crucible carrying waste plastics and porous composite materials into a vacuum bag and sealing it in a nitrogen-protected glove box, unscrewing the crucible through the vacuum bag after the reaction under microwave, and sampling by inserting a syringe into the vacuum bag; where an industrial microwave oven with an air inlet and an air outlet (e.g., a microwave pyrolysis reactor) is used, the gas collection method is as follows: purging with nitrogen during the reaction, and sampling and collecting with a gas collection bag at the air outlet.

The carbon fiber assembly in the method for simultaneously recycling biomass and carbon dioxide using microwave according to the present invention is a material consisting of a large number of carbon fiber ends assemblyd in a disordered arrangement, wherein plasma can be generated between the carbon fiber ends under microwave irradiation. In the present invention, a carbon fiber assembly is obtained by controlling the number of carbon fiber ends contained in each gram of the carbon fiber assembly. Although the carbon fiber assembly is pure carbon fiber, it can generate plasma and a high temperature of more than 1000°C under microwave irradiation. This overcomes the problems of high brittleness and easy damage of porous composite materials in the prior art. Moreover, the carbon fiber assembly of the present invention has simple raw materials, is easy to prepare, and has high popularization and application value.

The present invention employs a carbon fiber assembly that is not easy to damage and can generate plasma in a microwave field in the atmosphere of a carbon dioxide-containing gas, to realize the recycling of carbon dioxide while simultaneously reducing the coke and tar generated during biomass pyrolysis and improving the utilization rate of biomass microwave pyrolysis, thereby achieving the simultaneous and efficient recycling of carbon dioxide and biomass, which has a wide application market.

An eighth aspect of the present invention is to provide a method for simultaneously recycling polyolefin and carbon dioxide using microwave, comprising:
contacting the polyolefin with a carbon fiber assembly, applying microwave to the polyolefin and carbon fiber assembly in the atmosphere of a carbon dioxide-containing gas, and reacting the polyolefin and carbon dioxide to convert into a gaseous product with carbon monoxide as the main component;
the carbon fiber assembly is the carbon fiber assembly according to the first aspect or the carbon fiber assembly prepared by the preparation method according to the second aspect.

Through the above technical solution, the present invention brings a polyolefin into contact with a carbon fiber assembly, and applies microwave to the polyolefin and carbon fiber assembly in the atmosphere of a carbon dioxide-containing gas. The carbon fiber assembly generates high temperature and plasma in the microwave field in the atmosphere of a carbon dioxide-containing gas, and under the combined action of high temperature and plasma, the polyolefin and carbon dioxide are converted into gaseous products (i.e., syngas) with carbon monoxide as the main component.

In the present invention, the gaseous product with carbon monoxide as the main component refers to: in terms of volume content, with the total volume of the gaseous product being 100%, the content of carbon monoxide in the gaseous product is 20% or more, preferably 40% or more, and more preferably 50% or more.

According to the present invention, the weight ratio of the polyolefin to the carbon fiber assembly can be selected within a wide range. In a preferred embodiment of the present invention, the weight ratio of the polyolefin to the carbon fiber assembly is (1:100) to (100:1), preferably (1:50) to (50:1), and more preferably (1:30) to (30:1).

In a preferred embodiment of the present invention, the carbon dioxide-containing gas comprises pure carbon dioxide gas or a carbon dioxide-containing mixed gas; preferably, the carbon dioxide-containing mixed gas is a mixed gas of carbon dioxide with nitrogen and/or an inert gas and/or water vapor; more preferably, the inert gas is at least one of argon and helium.

In a preferred embodiment of the present invention, the volume fraction of carbon dioxide in the carbon dioxide-containing mixed gas is 5% to 99.9%, preferably 10% to 99.9%, and most preferably 20% to 99.9%.

According to the present invention, the power of the microwave can be selected within a wide range. In a preferred embodiment of the present invention, the power of the microwave is 1 W to 100 kW, preferably 200 W to 50 kW, and most preferably 500 W to 20 kW.

According to the present invention, the microwave irradiation time can be selected within a wide range. In a preferred embodiment of the present invention, the microwave irradiation time is 0.1 to 200 min, preferably 0.5 to 150 min, and most preferably 1 to 100 min.

In the present invention, the temperature of the carbon fiber assembly exceeds 1000°C, causing the pyrolysis of polyolefin.

The polyolefin can be brought into contact with the carbon fiber assembly by various means, as long as the polyolefin is in contact with the carbon fiber assembly. In a preferred embodiment of the present invention, the contact mode between the polyolefin and the carbon fiber assembly includes one or a combination of more than one of the following: placing the polyolefin on the carbon fiber assembly, placing the polyolefin in a cavity formed by the carbon fiber assembly, covering the polyolefin with the carbon fiber assembly, and blending the polyolefin with the carbon fiber assembly.

According to the present invention, the polyolefin can be selected within a wide range. In a preferred embodiment of the present invention, the polyolefin is a polyolefin prepared by homopolymerization or copolymerization of at least one monomer selected from ethylene, propylene, butene, α-olefin, cycloolefin, 4-methyl-1-pentene, and acrylic acid, as well as a mixture of the aforementioned polyolefins.

The polyolefin according to the present invention may be various types of polyolefins prepared by homopolymerization or copolymerization of ethylene, propylene, butene, α-olefin, cycloolefin, 4-methyl-1-pentene, acrylic acid and other monomers, including polyethylene (PE), polypropylene (PP), poly-1-butene (PB-1), ethylene-vinyl acetate copolymer (EVA), polyolefin elastomer (POE), cycloolefin homopolymer/copolymer (COP/COC), poly-4-methyl-1-pentene (PMP), ethylene-vinyl alcohol copolymer (EVOH), ethylene-acrylic acid copolymer (EAA), and the like, as well as mixtures of the aforementioned polyolefins.

Preferably, the polyolefin is at least one of polyethylene, polypropylene, poly-1-butene, ethylene-vinyl acetate copolymer, polyolefin elastomer, cycloolefin homopolymer/copolymer, poly-4-methyl-1-pentene, ethylene-vinyl alcohol copolymer, and ethylene-acrylic acid copolymer.

In a preferred embodiment of the present invention, the method comprises the following steps:
a. subjecting the polyolefin to small molecule removal treatment;
b. placing the treated polyolefin and the carbon fiber assembly in a sealable reaction vessel, wherein the reaction vessel is made of a microwave-transparent material;
c. introducing a carbon dioxide-containing gas into the reaction vessel to displace air;
d. activating the microwave, placing the reaction vessel in a microwave field to carry out the reaction, and collecting the gaseous product generated by the reaction.

The specific steps of the method for simultaneously recycling polyolefin and carbon dioxide using microwave are as follows:
a. subjecting the polyolefin to small molecule removal treatment at 50°C to 200°C for 1 min to 240 min, where the small molecule removal device can be commercially available drying device, such as a blast dryer, a microwave oven, a thermal radiation meter, etc., or carrying out the small molecule removal treatment by sun drying, air drying, etc., such that the polyolefin does not produce a thermal weight loss of more than 1% within 10 min at 200°C;
b. placing the polyolefin and the carbon fiber assembly together in any mode to ensure that the polyolefin can contact the carbon fiber assembly;
c. introducing pure carbon dioxide or a mixed gas of carbon dioxide with one or more of nitrogen, argon, helium, and water vapor into the reaction system to displace air;
d. activating the microwave and collecting the gaseous product generated by the reaction.

The microwave field in the method of the present invention can employ various microwave devices in the prior art, such as a household microwave oven, an industrial microwave device (e.g., a microwave pyrolysis reactor), and the like.

According to the present invention, a microwave-transparent material refers to that microwave can radiate to the sample through the wall of the reaction vessel made of the material.

In the method of the present invention, the device for placing or carrying the polyolefin and the carbon fiber assembly can be selected from various vessels or pipelines in the prior art that are microwave-penetrable and resistant to high temperatures above 1200°C, such as quartz crucibles, quartz reactors, quartz tubes, alumina crucibles, alumina reactors, alumina tubes, and the like.

In the method of the present invention, the polyolefin is gasified after pyrolysis, and the gas obtained after pyrolysis can be collected for subsequent treatment, such as being used as a fuel after gas separation or as a chemical industrial raw material for subsequent reaction and production.

The collection of the gaseous product is a conventional method in the prior art, which is preferably carried out under an inert atmosphere. For example, where a microwave oven is used as the microwave field, the gas collection method is as follows: placing the quartz crucible carrying waste plastics and porous composite materials into a vacuum bag and sealing it in a nitrogen-protected glove box, unscrewing the crucible through the vacuum bag after the reaction under microwave, and sampling by inserting a syringe into the vacuum bag; where an industrial microwave oven with an air inlet and an air outlet (e.g., a microwave pyrolysis reactor) is used, the gas collection method is as follows: purging with nitrogen during the reaction, and sampling and collecting with a gas collection bag at the air outlet.

The carbon fiber assembly in the method for simultaneously recycling polyolefin and carbon dioxide using microwave according to the present invention is a material consisting of a large number of carbon fiber ends assemblyd in a disordered arrangement, wherein plasma can be generated between the carbon fiber ends under microwave irradiation. In the present invention, a carbon fiber assembly is obtained by controlling the number of carbon fiber ends contained in each gram of the carbon fiber assembly. Although the carbon fiber assembly is pure carbon fiber, it can generate plasma and a high temperature of more than 1000°C under microwave irradiation. This overcomes the problems of high brittleness and easy damage of porous composite materials in the prior art. Moreover, the carbon fiber assembly of the present invention has simple raw materials, is easy to prepare, and has high popularization and application value.

The present invention employs a carbon fiber assembly that is not easy to damage and can generate plasma in a microwave field in the atmosphere of a carbon dioxide-containing gas, to realize the recycling of carbon dioxide while simultaneously reducing the coke and tar generated during polyolefin pyrolysis and improving the utilization rate of polyolefin microwave pyrolysis, thereby achieving the simultaneous and efficient recycling of carbon dioxide and polyolefin, which has a wide application market.

A ninth aspect of the present invention is to provide a method for simultaneously recycling VOCs and carbon dioxide using microwave, comprising:
contacting a mixed gas containing carbon dioxide and VOCs with a carbon fiber assembly, and under the condition of applying microwave to the carbon fiber assembly, reacting the VOCs and carbon dioxide to convert into pyrolysis gas;
the carbon fiber assembly is the carbon fiber assembly according to the first aspect or the carbon fiber assembly prepared by the preparation method according to the second aspect.

Studies have found that VOCs can be pyrolyzed into methane, ethylene, hydrogen, and amorphous carbon under the action of microwave plasma at a high temperature of more than 1000°C, and amorphous carbon can react with carbon dioxide at a high temperature of 1000°C to generate carbon monoxide. Methane, carbon monoxide, and hydrogen are important energy fuels, ethylene can be used to produce polyethylene, and hydrogen and carbon monoxide can be used to prepare alkanes through Fischer-Tropsch synthesis. Therefore, the technology for simultaneously converting VOCs and carbon dioxide into methane, ethylene, carbon monoxide, and hydrogen has extremely high economic value and application market.

In the above technical solution of the present invention, the carbon fiber assembly is a material consisting of a large number of carbon fiber ends assemblyd in a disordered arrangement, wherein plasma can be generated between the carbon fiber ends under microwave irradiation. When the mixed gas containing VOCs and carbon dioxide flows through a microwave-transparent vessel containing the carbon fiber assembly, microwave irradiation is applied to the carbon fiber assembly. The carbon fiber assembly generates high temperature and plasma in the microwave field in the atmosphere of a carbon dioxide-containing gas, and under the combined action of high temperature and plasma, VOCs and carbon dioxide are converted into a gas with carbon monoxide, methane, ethylene and hydrogen as the main components.

According to the present invention, preferably, in the mixed gas containing carbon dioxide and VOCs, based on the total volume of VOCs and carbon dioxide being 100%, the content of VOCs is 10% to 90%, preferably 20% to 80%, and more preferably 30% to 70%.

The amount of the carbon fiber assembly is ≥ 1% of the total mass of the mixed gas containing carbon dioxide and VOCs to be treated, preferably ≥ 3%, and more preferably ≥ 5%.

The pyrolysis gas contains methane, ethylene, hydrogen and carbon monoxide. Preferably, in terms of volume content, with the total volume of the pyrolysis gas being 100%, the total content of methane, ethylene, hydrogen and carbon monoxide in the pyrolysis gas is more than 50%, preferably more than 80%, and more preferably more than 90%.

According to the present invention, preferably, the power of the microwave is 1 W to 100 kW, preferably 200 W to 50 kW, and most preferably 500 W to 20 kW; and/or,
the microwave irradiation time is 0.1 to 200 min, preferably 0.5 to 150 min, and most preferably 1 to 100 min; and/or,
the temperature of the carbon fiber assembly exceeds 1000°C, causing the pyrolysis of VOCs.

According to the present invention, it is preferred that VOCs can be in full contact with the carbon fiber assembly. Specifically and preferably, the contact mode between the mixed gas containing carbon dioxide and VOCs and the carbon fiber assembly includes: introducing carbon dioxide and VOCs into the reactor through the pores of the carbon fiber assembly separately or simultaneously; more preferably, introducing carbon dioxide and VOCs from the bottom of the carbon fiber assembly separately or simultaneously, or placing the carbon fiber assembly in a U-shaped vessel and introducing carbon dioxide and VOCs from one end of the U-shaped vessel separately or simultaneously.

According to the present invention, the VOCs, i.e., volatile organic compounds, refer to organic compounds with a boiling point lower than 260°C under standard atmospheric pressure; preferably, the VOCs include one or more of 2-methylpentane, hydrogen, n-hexane, 2,2,4-trimethylpentane, n-heptane, 2,3,4-trimethylpentane, methylcyclohexane, n-octane, n-nonane, n-decane, propane, isobutane, isobutene, n-butane, cyclopentane, isopentane, n-pentane, ethane, n-undecane, n-dodecane, methylcyclopentane, 3-methylpentane, 3-methylhexane, 2-methylhexane, 2,4-dimethylpentane, 2,2-dimethylbutane, 2,3-dimethylbutane, cyclohexane, 2-methylheptane, 3-methylheptane, 2,3-dimethylpentane, propylene, trans-2-butene, 1-butene, cis-2-butene, 1-pentene, cis-2-pentene, ethylene, acetylene, benzene, ethylbenzene, o-xylene, m-xylene, p-xylene, methane, toluene, m-ethyltoluene, p-ethyltoluene, o-ethyltoluene, styrene, cumene, n-propylbenzene, 1,3,5-trimethylbenzene, 1,2,4-trimethylbenzene, 1,2,3-trimethylbenzene, m-diethylbenzene, p-diethylbenzene, acetone, 1,3-butadiene and carbon monoxide.

According to the present invention, preferably, the method for simultaneously recycling VOCs and carbon dioxide using microwave comprises the following steps:
a. placing a carbon fiber assembly in a sealable reaction vessel, wherein the reaction vessel is made of a microwave-transparent material;
b. introducing carbon dioxide into the reaction vessel to displace air, and then introducing a mixed gas containing carbon dioxide and VOCs;
c. activating the microwave, placing the reaction vessel in a microwave field to carry out the reaction, and collecting the gaseous product generated by the reaction. Preferably: VOCs are introduced from the bottom of the carbon fiber assembly, or the carbon fiber heating material is placed in a U-shaped microwave-transparent vessel, and VOCs are introduced from one end of the U-shaped microwave-transparent vessel.

The microwave field in the method of the present invention can employ various microwave devices in the prior art, such as a household microwave oven, an industrial microwave device (e.g., a microwave pyrolysis reactor), and the like.

According to the present invention, a microwave-transparent material refers to that microwave can radiate to the sample through the wall of the reaction vessel made of the material.

In the method of the present invention, the device for placing or carrying the carbon fiber assembly can be selected from various vessels or pipelines in the prior art that are microwave-penetrable and resistant to high temperatures above 1200°C, such as quartz crucibles, quartz reactors, quartz tubes, alumina crucibles, alumina reactors, alumina tubes, and the like.

In the method of the present invention, the VOCs is gasified after pyrolysis, and the gas obtained after pyrolysis can be collected for subsequent treatment, such as being used as a fuel after gas separation or as a chemical industrial raw material for subsequent reaction and production.

The collection of the gaseous product is a conventional method in the prior art, which is preferably carried out under an inert atmosphere. For example, where a microwave oven is used as the microwave field, the gas collection method is as follows: placing the quartz crucible carrying waste plastics and porous composite materials into a vacuum bag and sealing it in a nitrogen-protected glove box, unscrewing the crucible through the vacuum bag after the reaction under microwave, and sampling by inserting a syringe into the vacuum bag; where an industrial microwave oven with an air inlet and an air outlet (e.g., a microwave pyrolysis reactor) is used, the gas collection method is as follows: purging with nitrogen during the reaction, and sampling and collecting with a gas collection bag at the air outlet.

The carbon fiber assembly in the method for simultaneously recycling VOCs and carbon dioxide using microwave according to the present invention is a material consisting of a large number of carbon fiber ends assemblyd in a disordered arrangement, wherein plasma can be generated between the carbon fiber ends under microwave irradiation. In the present invention, a carbon fiber assembly is obtained by controlling the number of carbon fiber ends contained in each gram of the carbon fiber assembly. Although the carbon fiber assembly is pure carbon fiber, it can generate plasma and a high temperature of more than 1000°C under microwave irradiation. This overcomes the problems of high brittleness and easy damage of porous composite materials in the prior art. Moreover, the carbon fiber assembly of the present invention has simple raw materials, is easy to prepare, and has high popularization and application value.

The present invention employs a carbon fiber assembly that is not easy to damage and can generate plasma in a microwave field in the atmosphere of a carbon dioxide-containing gas, to efficiently pyrolyze VOCs into methane, ethylene, hydrogen and amorphous carbon, where amorphous carbon can further react with carbon dioxide at high temperature to generate carbon monoxide, thereby achieving the simultaneous and efficient recycling of VOCs and carbon dioxide.

### Brief Description of the Figures

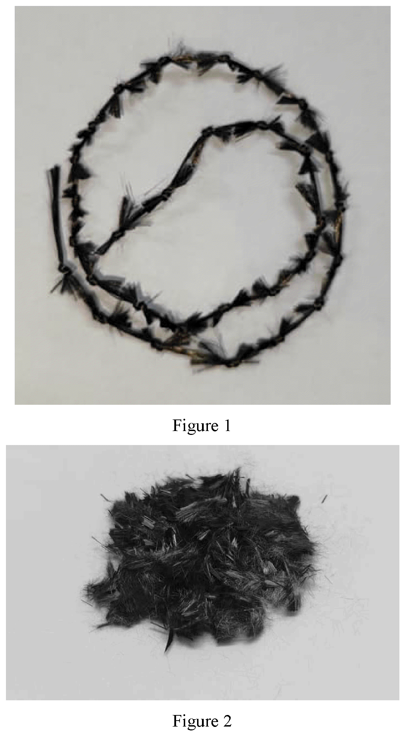

Figure 1 is a morphological photograph of the carbon fiber assembly in Example 1 of the present invention; wherein the carbon fiber basic units are the carbon fiber bundle prepared from carbon fiber tow;
Figure 2 is a morphological photograph of the carbon fiber assembly in Example 2 of the present invention; wherein the carbon fiber basic unit is the single carbon fibers;

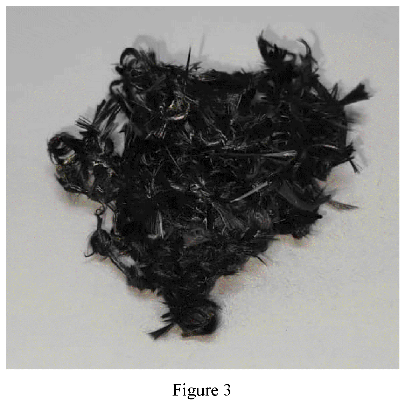

Figure 3 is a morphological photograph of the carbon fiber assembly in Example 5 of the present invention; wherein the carbon fiber basic units include both single carbon fibers and carbon fiber bundle.

### Detailed Description of the Embodiments

The present invention will be described in detail below with reference to specific examples. It is necessary to point out here that the following examples are only used for further illustrating the present invention and shall not be construed as limiting the protection scope of the present invention. Some non-essential improvements and adjustments made to the present invention by those skilled in the art based on the content of the present invention still fall within the protection scope of the present invention.

The experimental data in the examples were determined using the following instruments and measurement methods:
In the examples, the components of the collected syngas were subjected to chromatographic analysis as follows:
The gaseous product collected after pyrolysis was analyzed using a Refinery Gas Analyzer (HP Agilent 7890A, configured with 3 channels, including 1 FID and 2 TCDs (Thermal Conductivity Detectors)) in accordance with the ASTM D1945-14 method. Hydrocarbons were analyzed on the FID channel. One TCD with nitrogen as the carrier gas was used to determine the hydrogen content, due to the small difference in conductivity between hydrogen and helium carrier gases. The other TCD with helium as the carrier gas was used to detect CO, CO₂, N₂ and O₂. For quantitative analysis, the response factor was determined using RGA (Refinery Gas Analysis) calibration gas standard.

The number of carbon fiber ends contained in each gram of the carbon fiber assembly was obtained through theoretical calculation, the specific calculation method being as follows:
(1) When the carbon fiber basic units of the carbon fiber assembly are single carbon fibers, the formula corresponding to the number of carbon fiber ends contained in each gram of the carbon fiber assembly is as follows: $N = \frac{8}{{ρπd}^{2} L}$ wherein N is the number of carbon fiber ends contained in each gram of the carbon fiber assembly (unit: pieces); ρ is the density of the carbon fiber (unit: g/m³); d is the diameter of the carbon fiber (unit: m); and L is the length of the carbon fiber filament (unit: m).
(2) When the carbon fiber basic units of the carbon fiber assembly are carbon fiber bundle prepared from carbon fiber tow with more than one knotted node, the method for calculating the number of carbon fiber ends contained in each gram of the carbon fiber assembly is as follows: $N = \left[\left(n-1\right)\times 2\times t+2\right] \times k / m$ wherein N is the number of carbon fiber ends contained in each gram of the carbon fiber assembly (unit: pieces); n is the number of knotted nodes on the carbon fiber tow; t is the cutting ratio of the long carbon fiber tow between knotted nodes; k is the number of carbon fibers in the carbon fiber tow; and m is the total mass of the carbon fiber tow (unit: g).

The calculation method described in Example 1 is taken as an example. A 5000 mm long T300 carbon fiber 12K tow was knotted (single knot) by itself at a knot spacing of 10 mm, resulting in 499 knots. Two-thirds of the carbon fibers at the midpoint between each two adjacent knotted nodes was cut off, which produced [(499-1)×2×2/3+2]×12000 = 7,992,000 carbon fiber ends. The knotted nodes formed by single knots were annular and had no free ends. The mass of the 5000 mm long T300 carbon fiber 12K tow was 3.96 g. Therefore, the number of carbon fiber ends contained in each gram of the carbon fiber assembly described in Example 1 was 7,992,000 ÷ 3.96 g ≈ 2×10⁶ pieces.

(3) For a carbon fiber assembly prepared from carbon fiber tow with more than one fixed node and/or bound node, the method for calculating the number of carbon fiber ends contained in each gram of the carbon fiber assembly is as follows: $N = \left[\left.\left(n-1\right)\times 2\times t\times k+2k+{c}_{1}\times {n}_{1}\times {k}_{1}\right)\right] / m$
wherein N is the number of carbon fiber ends contained in each gram of the carbon fiber assembly (unit: pieces); n is the total number of fixed nodes formed by knotting and binding on the carbon fiber tow; t is the cutting ratio of the long carbon fiber tow at the fixed nodes; k is the number of carbon fibers in the long carbon fiber tow;
c₁ is the number of ends per binding material at each fixed node when the fixed node is a bound node; n₁ is the number of bound nodes; k₁ is the number of carbon fibers in the carbon fiber tow contained in the binding material of the bound node.
m is the total mass of the carbon fiber tow (unit: g).

(4) When the carbon fiber basic units of the carbon fiber assembly include both single carbon fibers and carbon fiber bundle, the method for calculating the number of carbon fiber ends contained in each gram of the carbon fiber assembly is as follows: $N = \frac{\left[\left.\left(n-1\right)\times 2\times t\times k+2k+{c}_{1}\times {n}_{1}\times {k}_{1}\right)\right] + \left(\frac{8}{{ρπd}^{2} L}\right) \times {m}_{2}}{{m}_{1} + {m}_{2}}$ wherein N is the number of carbon fiber ends contained in each gram of the carbon fiber assembly (unit: pieces); n is the total number of fixed nodes formed by knotting and binding on the carbon fiber tow in the part of the carbon fiber assembly constructed with carbon fiber tow as the basic units; t is the cutting ratio of the long carbon fiber tow at the fixed nodes in the part of the carbon fiber assembly constructed with carbon fiber tow as the basic units; k is the number of carbon fibers in the long carbon fiber tow in the part of the carbon fiber assembly constructed with carbon fiber tow as the basic units; c₁ is the number of ends per binding material at each fixed node when the fixed node is a bound node, in the part of the carbon fiber assembly constructed with carbon fiber tow as the basic units; n₁ is the number of bound nodes in the part of the carbon fiber assembly constructed with carbon fiber tow as the basic units; k₁ is the number of carbon fibers in the carbon fiber tow contained in the binding material of the bound nodes, in the part of the carbon fiber assembly constructed with carbon fiber tow as the basic units; ρ is the density of the carbon fibers in the part of the carbon fiber assembly constructed with single carbon fibers as the basic units (unit: g/m³); d is the diameter of the carbon fibers in the part of the carbon fiber assembly constructed with single carbon fibers as the basic units (unit: m); L is the length of the carbon fiber filaments in the part of the carbon fiber assembly constructed with single carbon fibers as the basic units (unit: m); m₁ is the total mass of the part of the carbon fiber assembly constructed with carbon fiber tow as the basic units (unit: g); and m₂ is the total mass of the part of the carbon fiber assembly constructed with single carbon fibers as the basic units (unit: g).

The calculation method described in Example 5 is taken as an example. A 2500 mm long T300 carbon fiber 12K tow was knotted (single knot) by itself at a knot spacing of 10 mm, resulting in 249 knots. Two-thirds of the carbon fiber tow at a distance of 5 mm from one node between each two adjacent knotted nodes was cut off, which produced [(249-1)×2×2/3+ 2]×12000 = 3,992,000 carbon fiber ends. The knotted nodes formed by single knots were annular and had no free ends. The mass of the 2500 mm long T300 carbon fiber 12K tow was 1.98 g. Single T700 carbon fibers with a length of 5 mm, a diameter of 7 µm, and a density of 1.8 g/cm³ were added, with a total mass of 3 g. Therefore, the number of carbon fiber ends contained in each gram of the carbon fiber assembly described in Example 5 was: $N = \frac{\left[\left.\left(249-1\right)\times 2\times 2/3\times 12000+2\times 12000\right)\right] + \left(\frac{8}{1.8 \times {10}^{6} \times 3.14 \times {\left(7\times {10}^{- 6}\right)}^{2} \times 5 \times {10}^{- 3}}\right) \times 3}{1.98 + 3} \approx 4.3 \times {10}^{6} pieces .$

Method for temperature detection: Immediately after the end of microwave irradiation, a metal thermocouple was inserted into the reaction vessel and brought into contact with the carbon fiber assembly to measure the temperature.

### Preparation of carbon fiber assembly

### Example 1

A 5000 mm long T300 carbon fiber 12K tow (3.96 g, Weihai Guangwei Composite Materials Co., Ltd.) was taken and knotted with a single knot at a knot spacing of 10 mm, resulting in 499 knots. Two-thirds of the carbon fiber tow at a distance of 5 mm from one node between each two adjacent knotted nodes was cut off to prepare a carbon fiber assembly. The material was clumped and placed in a quartz jar. The number of carbon fiber ends contained in each gram of the carbon fiber assembly was approximately 2×10⁶ pieces. At this time, the material could generate plasma and an equilibrium temperature of 1200°C under 900 W microwave irradiation in an atmosphere of pure carbon dioxide.

### Comparative Example 1

A 5000 mm long T300 carbon fiber 12K tow (3.96 g, Weihai Guangwei Composite Materials Co., Ltd.) was taken and knotted with a single knot at a knot spacing of 250 mm, resulting in 19 knots. Two-thirds of the carbon fiber tow at a distance of 125 mm from one node between each two adjacent knotted nodes was cut off to prepare a carbon fiber assembly. The material was clumped and placed in a quartz jar. The number of carbon fiber ends contained in each gram of the carbon fiber assembly was approximately 7.9×10⁴ pieces. At this time, the material could only generate an equilibrium temperature of 300°C under 900 W microwave irradiation in an atmosphere of pure carbon dioxide.

### Example 2

4 g of single T300 carbon fibers (short carbon fibers, length: 3 mm, diameter: 7 µm, density: 1.76 g/cm³, Weihai Guangwei Composite Materials Co., Ltd.) were taken and randomly packed in a quartz jar. The number of carbon fiber ends contained in each gram of the carbon fiber assembly was approximately 9.8×10⁶ pieces. At this time, the material could generate plasma and reach an equilibrium temperature of 1400°C under 1200 W microwave irradiation in an atmosphere of pure carbon dioxide.

### Comparative Example 2

4 g of single T300 carbon fibers (short carbon fibers, length: 60 mm, diameter: 7 µm, density: 1.76 g/cm³, Weihai Guangwei Composite Materials Co., Ltd.) were taken and randomly packed in a quartz jar. The number of carbon fiber ends contained in each gram of the carbon fiber assembly was approximately 4.9×10⁵ pieces. At this time, the material could only generate an equilibrium temperature of 600°C under 1200 W microwave irradiation in an atmosphere of pure carbon dioxide.

### Example 3

A 5600 mm long T700 carbon fiber 12K tow (4.48 g, diameter: 7 µm, Weihai Guangwei Composite Materials Co., Ltd.) was taken and knotted with a single knot at a knot spacing of 14 mm, resulting in 399 knots. Two-thirds of the carbon fiber tow at a distance of 7 mm from one node between each two adjacent knotted nodes was cut off to prepare a carbon fiber assembly. The material was clumped and placed in a quartz jar. The number of carbon fiber ends contained in each gram of the carbon fiber assembly was approximately 1.4×10⁶ pieces. At this time, the material could generate plasma and an equilibrium temperature of 1100°C under 700 W microwave irradiation in an atmosphere of a mixed gas containing carbon dioxide and water vapor in a volume ratio of 90:10.

### Comparative Example 3

A 5000 mm long T700 carbon fiber 12K tow (4.0 g, Weihai Guangwei Composite Materials Co., Ltd.) was taken and knotted with a single knot at a knot spacing of 250 mm, resulting in 19 knots. Two-thirds of the carbon fiber tow at a distance of 125 mm from one node between each two adjacent knotted nodes was cut off to prepare a carbon fiber assembly. The material was clumped and placed in a quartz jar. The number of carbon fiber ends contained in each gram of the carbon fiber assembly was approximately 7.8×10⁴ pieces. At this time, the material could only generate an equilibrium temperature of 100°C under 700 W microwave irradiation in an atmosphere of a mixed gas containing carbon dioxide and water vapor in a volume ratio of 90:10.

### Example 4

6 g of single T700 carbon fibers (short carbon fibers, length: 5 mm, diameter: 7 µm, density: 1.8 g/cm³, Weihai Guangwei Composite Materials Co., Ltd.) were taken and randomly packed in a quartz jar. The number of carbon fiber ends contained in each gram of the carbon fiber assembly was approximately 5.8×10⁶ pieces. At this time, the material could generate plasma and an equilibrium temperature of 1050°C under 1200 W microwave irradiation in an atmosphere of a mixed gas containing carbon dioxide and water vapor in a volume ratio of 30:70.

### Comparative Example 4

6 g of single T700 carbon fibers (short carbon fibers, length: 35 mm, diameter: 7 µm, density: 1.8 g/cm³, Weihai Guangwei Composite Materials Co., Ltd.) were taken and randomly packed in a quartz jar. The number of carbon fiber ends contained in each gram of the carbon fiber assembly was approximately 8.3×10⁵ pieces. At this time, the material could only generate an equilibrium temperature of 900°C under 1200 W microwave irradiation in an atmosphere of a mixed gas containing carbon dioxide and water vapor in a volume ratio of 30:70.

### Example 5

A 2500 mm long T300 carbon fiber 12K tow (1.98 g, Weihai Guangwei Composite Materials Co., Ltd.) was taken and knotted with a single knot at a knot spacing of 10 mm, resulting in 249 knots. Two-thirds of the carbon fiber tow at a distance of 5 mm from one node between each two adjacent knotted nodes was cut off. 3 g of single T700 carbon fibers (short carbon fibers, length: 5 mm, diameter: 7 µm, density: 1.8 g/cm³, Weihai Guangwei Composite Materials Co., Ltd.) were taken and mixed with the knotted carbon fiber bundle to form a carbon fiber assembly, which was then randomly packed in a quartz jar. The number of carbon fiber ends contained in each gram of the carbon fiber assembly was approximately 4.3×10⁶ pieces. At this time, the material could generate plasma and an equilibrium temperature of 1280°C under 900 W microwave irradiation in an atmosphere of pure carbon dioxide.

The carbon fiber assemblies prepared in Examples 1-5 each contained more than 1×10⁶ carbon fiber ends per gram. Under microwave irradiation in an atmosphere of pure carbon dioxide or mixed gas (carbon dioxide and water vapor), these assemblies could generate a sufficient amount of plasma, so that the equilibrium temperature of the material was above 1000°C. In contrast, the carbon fiber assemblies prepared in Comparative Examples 1-4 each contained less than 1×10⁶ carbon fiber ends per gram. Under the same microwave irradiation conditions in an atmosphere of pure carbon dioxide or mixed gas (carbon dioxide and water vapor), these assemblies failed to generate a sufficient amount of plasma, so that the equilibrium temperature of the material was below 900°C.

### Examples of preparation of syngas from carbon dioxide using carbon fiber assembly:

### Example 6A

The carbon fiber assembly (4g) prepared in Example 1 was mixed with graphite (2g) from waste batteries, then the mixture was placed in a quartz jar and subjected to microwave irradiation at a power of 900 W for 20 min in an atmosphere of pure carbon dioxide. The graphite was completely consumed, and the collected gaseous products are shown in Table 1A.

### Example 7A

The carbon fiber assembly (4g) prepared in Example 2 was mixed with graphite (2g) from waste batteries, then the mixture was placed in a quartz jar and subjected to microwave irradiation at a power of 700 W for 20 min in an atmosphere of pure carbon dioxide. The graphite was completely consumed, and the collected gaseous products are shown in Table 1A.

### Example 8A

The carbon fiber assembly (4g) prepared in Example 1 was mixed with graphite (40g) from waste batteries, then the mixture was placed in a quartz jar and subjected to microwave irradiation at a power of 900 W for 20 min in an atmosphere of pure carbon dioxide. The graphite was completely consumed, and the collected gaseous products are shown in Table 1A.

### Example 9A

The carbon fiber assembly (8g) prepared in Example 3 was mixed with graphite (2g) from waste batteries, then the mixture was placed in a quartz jar and subjected to microwave irradiation at a power of 1200 W for 20 min in an atmosphere of a mixed gas containing carbon dioxide and water vapor in a volume ratio of 90:10. The graphite was completely consumed, and the collected gaseous products are shown in Table 1A.

### Example 10A

The carbon fiber assembly (6g) prepared in Example 4 was mixed with graphite (2g) from waste batteries, then the mixture was placed in a quartz jar and subjected to microwave irradiation at a power of 1200 W for 20 min in an atmosphere of a mixed gas containing carbon dioxide and water vapor in a volume ratio of 30:70. The graphite was completely consumed, and the collected gaseous products are shown in Table 1A.

### Example 11A

The carbon fiber assembly (8g) prepared in Example 3 was mixed with graphite (64g) from waste batteries, then the mixture was placed in a quartz jar and subjected to microwave irradiation at a power of 1200 W for 20 min in an atmosphere of a mixed gas containing carbon dioxide and water vapor in a volume ratio of 90:10. The graphite was completely consumed, and the collected gaseous products are shown in Table 1A.

### Comparative Example 5A

Graphite (2g) from waste batteries was placed in a quartz jar, and then subjected to microwave irradiation at a power of 900 W for 20 min in an atmosphere of pure carbon dioxide. There was no change in the mass of the graphite, and the collected gaseous products are shown in Table 1A.

### Comparative Example 6A

Graphite (2g) from waste batteries was placed in a quartz jar, and then subjected to microwave irradiation at a power of 1200 W for 20 min in an atmosphere of a mixed gas containing carbon dioxide and water vapor in a volume ratio of 30:70. There was no change in the mass of the graphite, and the collected gaseous products are shown in Table 1A.

**Table 1A**

| No. | Carbon dioxide / vol% | Carbon monoxide / vol% | Hydrogen / vol% |
|---|---|---|---|
| Example 6A | 1.7 | 98.3 | 0 |
| Example 7A | 1.5 | 98.5 | 0 |
| Example 8A | 4.6 | 95.4 | 0 |
| Example 9A | 1.2 | 74.1 | 24.7 |
| Example 10A | 2.3 | 50.9 | 46.8 |
| Example 11A | 3.2 | 73.4 | 23.4 |
| Comparative Example 5A | 0 | 100 | 0 |
| Comparative Example 6A | 0 | 100 | 0 |

Examples 6A-8A demonstrate that microwave irradiation of graphite from waste batteries mixed with the carbon fiber assembly in an atmosphere of pure carbon dioxide enables the efficient reaction of graphite and carbon dioxide to produce carbon monoxide. Examples 9A-11A demonstrate that microwave irradiation of graphite from waste batteries mixed with the carbon fiber assembly in an atmosphere of a mixed gas containing carbon dioxide and water vapor enables the efficient reaction of graphite, carbon dioxide, and water vapor to produce carbon monoxide and hydrogen.

Compared with Example 6A, Comparative Example 5A demonstrates that when the carbon fiber assembly is removed, no carbon monoxide is detected in the gaseous products collected after microwave irradiation. This indicates that the use of the carbon fiber assembly is critical for the reaction of carbon dioxide with graphite to produce carbon monoxide.

Compared with Example 10A, Comparative Example 6A demonstrates that when the carbon fiber assembly is removed, neither carbon monoxide nor hydrogen is detected in the gaseous products collected after microwave irradiation. This indicates that the use of the carbon fiber assembly is critical for the reaction of the mixed gas containing carbon dioxide and water vapor with graphite to produce carbon monoxide and hydrogen. Carbon monoxide and hydrogen constitute syngas, which is also an important chemical raw material. These results confirm that the carbon fiber assembly can effectively convert carbon dioxide into syngas, thereby realizing the resource utilization of carbon dioxide.

### Examples of simultaneous recycling of biomass and carbon dioxide using microwave:

The experimental data in the examples were determined using the following instruments and measurement methods:
In the examples, the components of the collected syngas were subjected to chromatographic analysis as follows:
The gaseous product collected after pyrolysis was analyzed using a Refinery Gas Analyzer (HP Agilent 7890A, configured with 3 channels, including 1 FID and 2 TCDs (Thermal Conductivity Detectors)) in accordance with the ASTM D1945-14 method. Hydrocarbons were analyzed on the FID channel. One TCD with nitrogen as the carrier gas was used to determine the hydrogen content, due to the small difference in conductivity between hydrogen and helium carrier gases. The other TCD with helium as the carrier gas was used to detect CO, CO₂, N₂ and O₂. For quantitative analysis, the response factor was determined using RGA (Refinery Gas Analysis) calibration gas standard.

In the examples, the residual rate of carbon-based solid matter X_{c} after biomass pyrolysis was analyzed by the gravimetric method:
The mass of the biomass after drying treatment was weighed as M₁, and the mass of the residual solid matter after biomass pyrolysis was weighed as M₂. Since the biomass contains inorganic components such as silicates, the residual solid after biomass pyrolysis was combusted in air at 800°C, and the mass of the solid matter after combustion was weighed as M₃.

Residual rate of carbon-based solid matter after biomass pyrolysis: ${X}_{c} = \left({M}_{2}-{M}_{3}\right) / {M}_{1} \times 100 %$

The raw materials used in the examples of the present invention were all commercially available.

### Example 6B

Straw, bagasse, branches, leaves, wood chips, rice husks, rice straw, peanut shells, coconut shells, palm seed shells, and corn cobs were taken and dehydrated using a blast dryer at 200°C for 5 hours. 2 g of the dehydrated straw, bagasse, branches, leaves, wood chips, rice husks, rice straw, peanut shells, coconut shells, palm seed shells, and corn cobs were each placed on the surface of 4 g of the carbon fiber assembly obtained in Example 1. The biomass and carbon fiber assembly were then placed in a quartz jar, and subjected to microwave irradiation using an industrial microwave oven at a power of 700 W for 10 min in an atmosphere of pure carbon dioxide. All materials underwent gasification and pyrolysis after microwave irradiation, with only a small amount of black residue remaining. The residual rate of carbon-based solid matter X_{c} was measured by gravimetry, as shown in Table 1B, and the composition of the obtained gaseous products is shown in Table 2B.

### Example 7B

Straw, bagasse, branches, leaves, wood chips, rice husks, rice straw, peanut shells, coconut shells, palm seed shells, and corn cobs were taken and dehydrated using an industrial microwave oven at a power of 350 W for 30 min with air purging. 64 g of the dehydrated straw, bagasse, branches, leaves, wood chips, rice husks, rice straw, peanut shells, coconut shells, palm seed shells, and corn cobs were each mixed with 32 g of the carbon fiber assembly obtained in Example 1. The biomass and carbon fiber assembly were then placed in a quartz jar, and subjected to microwave irradiation using an industrial microwave oven at a power of 2000 W for 10 min in an atmosphere of a mixed gas containing carbon dioxide and nitrogen in a volume ratio of 70:30. All materials underwent gasification and pyrolysis after microwave irradiation, with only a small amount of black residue remaining. The residual rate of carbon-based solid matter X_{c} was measured by gravimetry, as shown in Table 1B, and the composition of the obtained gaseous products is shown in Table 2B.

### Comparative Example 5B

This example was carried out under the same conditions as those in Example 6B except for that the 4 g of the carbon fiber assembly obtained in Example 1 as used in Example 6B was replaced with 4 g of silicon carbide powder. A large amount of black residue was present in the pyrolysis products after microwave irradiation. The residual rate of carbon-based solid matter X_{c} was measured by gravimetry, as shown in Table 1B.

### Comparative Example 6B

This example was carried out under the same conditions as those in Example 6B except for that the gas atmosphere for microwave irradiation used in Example 6B was changed from pure carbon dioxide to pure nitrogen. A large amount of black residue was present in the pyrolysis products after microwave irradiation. The residual rate of carbon-based solid matter X_{c} was measured by gravimetry, as shown in Table 1B.

### Comparative Example 7B

This example was carried out under the same conditions as those in Example 6B except for that the 4 g of the carbon fiber assembly obtained in Example 1 as used in Example 6B was replaced with 4 g of the carbon fiber assembly obtained in Comparative Example 1. A large amount of black residue was present in the pyrolysis products after microwave irradiation. The residual rate of carbon-based solid matter X_{c} was measured by gravimetry, as shown in Table 1B.

**Table 1B**

| Biomass type | Residual rate of carbon-based solid matter X_{c} /% | | | | |
|---|---|---|---|---|---|
| | Example 6B | Example 7B | Comparative Example 5B | Comparative Example 6B | Comparative Example 7B |
| Straw | 4.3 | 4.2 | 25.7 | 18.5 | 87.3 |
| Bagasse | 4.2 | 4.6 | 29.0 | 17.0 | 82.1 |
| Branches | 3.1 | 4.8 | 24.3 | 19.8 | 78.6 |
| Leaves | 5.0 | 4.7 | 25.7 | 16.8 | 79.7 |
| Wood chips | 4.5 | 4.9 | 26.8 | 17.8 | 76.8 |
| Rice husks | 4.9 | 4.6 | 26.4 | 15.7 | 81.4 |
| Rice straw | 3.3 | 4.9 | 23.6 | 18.4 | 75.4 |
| Peanut shells | 4.8 | 4.8 | 27.3 | 15.1 | 89.7 |
| Coconut shells | 4.1 | 4.3 | 22.6 | 17.1 | 74.9 |
| Palm seed shells | 3.3 | 5.0 | 26.7 | 15.7 | 79.3 |
| Corn cobs | 3.4 | 4.1 | 27.2 | 16.4 | 80.1 |

**Table 2B. Gas phase composition of pyrolysis products excluding nitrogen**

| Example | Biomass | Carbon monoxide/ vol% | Hydrogen/ vol% | Hydrocarbons/ vol% | Carbon dioxide/ vol% |
|---|---|---|---|---|---|
| | Straw | 65.0 | 27.4 | 5.4 | 2.2 |
| | Bagasse | 64.4 | 28.4 | 5.5 | 1.7 |
| Example 6B | Branches | 60.1 | 32.2 | 5.6 | 2.1 |
| | Leaves | 63.1 | 30.7 | 3.5 | 2.8 |
| | Wood chips | 63.3 | 30.4 | 3.7 | 2.6 |
| | Rice husks | 63.0 | 31.0 | 3.9 | 2.1 |
| | Rice straw | 64.8 | 28.6 | 5.1 | 1.5 |
| | Peanut shells | 62.0 | 31.7 | 3.7 | 2.6 |
| | Coconut shells | 62.2 | 33.1 | 3.5 | 1.3 |
| | Palm seed shells | 63.5 | 30.1 | 4.7 | 1.8 |
| | Corn cobs | 63.9 | 29.1 | 4.0 | 3.0 |
| Example 7B | Straw | 63.3 | 30.5 | 4.6 | 1.6 |
| | Bagasse | 62.5 | 32.1 | 3.2 | 2.2 |
| | Branches | 60.7 | 32.7 | 5.1 | 1.6 |
| | Leaves | 60.3 | 32.6 | 4.4 | 2.6 |
| | Wood chips | 64.4 | 29.3 | 4.8 | 1.5 |
| | Rice husks | 60.9 | 34.2 | 3.4 | 1.4 |
| | Rice straw | 61.8 | 32.1 | 3.7 | 2.4 |
| | Peanut shells | 62.3 | 32.8 | 3.4 | 1.6 |
| | Coconut shells | 60.1 | 33.7 | 3.5 | 2.7 |
| | Palm seed shells | 62.3 | 31.7 | 4.0 | 2.0 |
| | Corn cobs | 63.5 | 30.6 | 3.5 | 2.3 |

As shown in Table 1B, the final residual rates of carbon-based solid matter (X_{c}) from microwave pyrolysis of biomass using the carbon fiber assembly in an atmosphere of a carbon dioxide-containing gas were all less than 5% (Examples 6B and 7B), whereas the X_{c} from microwave pyrolysis of biomass using conventional microwave heating material was greater than 20% (Comparative Example 5B). Moreover, the final X_{c} from microwave pyrolysis of biomass using the carbon fiber assembly alone in an atmosphere of other than a carbon dioxide-containing gas was greater than 15% (Comparative Example 6B). This demonstrates that microwave pyrolysis of biomass using the carbon fiber assembly in an atmosphere of a carbon dioxide-containing gas enables more complete pyrolysis of biomass compared to other pyrolysis methods. Additionally, since the carbon fiber assembly obtained in Comparative Example 1 could only reach a temperature of 300°C under microwave irradiation in an atmosphere of carbon dioxide, resulting in minimal pyrolysis of biomass, it could be seen that the number of carbon fiber ends contained in each gram of the carbon fiber assembly must be greater or equal to 1×10⁶ in order to achieve effective pyrolysis of biomass.

As shown in Table 2B, the gases produced by biomass pyrolysis in Examples 6B and 7B, with nitrogen excluded, were mainly composed of carbon monoxide and hydrogen, in which the volume fraction of carbon monoxide was greater than 60% and that of hydrogen was greater than 25%. These gases can be used as chemical raw materials or fuels.

The carbon fiber assemblies obtained in Examples 2-5 were subjected to the same experiments as described above, yielding experimental phenomena and results similar to those of Example 6B.

### Examples of simultaneous recycling of polyolefin and carbon dioxide using microwave:

The experimental data in the examples were determined using the following instruments and measurement methods:
In the examples, the components of the collected syngas were subjected to chromatographic analysis as follows:
The gaseous product collected after pyrolysis was analyzed using a Refinery Gas Analyzer (HP Agilent 7890A, configured with 3 channels, including 1 FID and 2 TCDs (Thermal Conductivity Detectors)) in accordance with the ASTM D1945-14 method. Hydrocarbons were analyzed on the FID channel. One TCD with nitrogen as the carrier gas was used to determine the hydrogen content, due to the small difference in conductivity between hydrogen and helium carrier gases. The other TCD with helium as the carrier gas was used to detect CO, CO₂, N₂ and O₂. For quantitative analysis, the response factor was determined using RGA (Refinery Gas Analysis) calibration gas standard.

In the examples, the residual rate of carbon-based solid matter X_{c} after polyolefin pyrolysis was analyzed by the gravimetric method:
The mass of the polyolefin after drying treatment was weighed as M₁, and the mass of the residual solid matter after polyolefin pyrolysis was weighed as M₂.

Residual rate of carbon-based solid matter after polyolefin pyrolysis:
${X}_{c} = {M}_{2} / {M}_{1} \times 100 %$

The raw materials used in the examples of the present invention were all commercially available.

### Example 6C

Polyethylene pellets, polypropylene flakes removed from waste food containers, poly-1-butene pellets, and ethylene-vinyl acetate copolymer removed from waste shoe soles were taken and subjected to small molecule removal treatment using a blast dryer at 200°C for 5 hours. 2 g of the polyethylene pellets, polypropylene flakes from waste food containers, poly-1-butene pellets, and ethylene-vinyl acetate copolymer from waste shoe soles after the small molecule removal treatment were each placed on the surface of 4 g of the carbon fiber assembly obtained in Example 1. The polyolefin and carbon fiber assembly were then placed in a quartz jar, and subjected to microwave irradiation using an industrial microwave oven at a power of 700 W for 10 min in an atmosphere of pure carbon dioxide. All materials underwent gasification and pyrolysis after microwave irradiation, with only a small amount of black residue remaining. The residual rate of carbon-based solid matter X_{c} was measured by gravimetry, as shown in Table 1C, and the composition of the obtained gaseous products is shown in Table 2C.

### Example 7C

Polyethylene pellets, polypropylene flakes removed from waste food containers, poly-1-butene pellets, and ethylene-vinyl acetate copolymer removed from waste shoe soles were taken and subjected to small molecule removal treatment using an industrial microwave oven at a power of 350 W for 30 min with air purging. 64 g of the polyethylene pellets, polypropylene flakes from waste food containers, poly-1-butene pellets, and ethylene-vinyl acetate copolymer from waste shoe soles after the small molecule removal treatment were each mixed with 32 g of the carbon fiber assembly obtained in Example 1. The polyolefin and carbon fiber assembly were then placed in a quartz jar, and subjected to microwave irradiation using an industrial microwave oven at a power of 2000 W for 10 min in an atmosphere of a mixed gas containing carbon dioxide and water vapor in a volume ratio of 80:20. All materials underwent gasification and pyrolysis after microwave irradiation, with only a small amount of black residue remaining. The residual rate of carbon-based solid matter X_{c} was measured by gravimetry, as shown in Table 1C, and the composition of the obtained gaseous products is shown in Table 2C.

### Comparative Example 5C

This example was carried out under the same conditions as those in Example 6C except for that the 4 g of the carbon fiber assembly obtained in Example 1 as used in Example 6C was replaced with 4 g of silicon carbide powder. A large amount of black residue was present in the pyrolysis products after microwave irradiation. The residual rate of carbon-based solid matter X_{c} was measured by gravimetry, as shown in Table 1C.

### Comparative Example 6C

This example was carried out under the same conditions as those in Example 6C except for that the gas atmosphere for microwave irradiation used in Example 6C was changed from pure carbon dioxide to pure nitrogen. A large amount of black residue was present in the pyrolysis products after microwave irradiation. The residual rate of carbon-based solid matter X_{c} was measured by gravimetry, as shown in Table 1C.

### Comparative Example 7C

This example was carried out under the same conditions as those in Example 6C except for that the 4 g of the carbon fiber assembly obtained in Example 1 as used in Example 6C was replaced with 4 g of the carbon fiber assembly obtained in Comparative Example 1. A large amount of black residue was present in the pyrolysis products after microwave irradiation. The residual rate of carbon-based solid matter X_{c} was measured by gravimetry, as shown in Table 1C.

**Table 1C**

| Type of polyolefin | Residual rate of carbon-based solid matter X_{c} /% | | | | |
|---|---|---|---|---|---|
| | Example 6C | Example 7C | Comparative Example 5C | Comparative Example 6C | Comparative Example 7C |
| Polyethylene pellets | 1.2 | 1.6 | 9.2 | 15.3 | 88.9 |
| Polypropylene flakes removed from waste food containers | 1.4 | 1.7 | 8.8 | 16.1 | 87.7 |
| Poly-1-butene pellets | 2.5 | 2.7 | 10.2 | 18.5 | 89.5 |
| Ethylene-vinyl acetate copolymer removed from waste shoe soles | 1.4 | 2.1 | 9.5 | 15.6 | 80.0 |

**Table 2C. Gas phase composition of pyrolysis products**

| Example | Polyolefin | CO / vol% | H₂ / vol% | CO₂ / vol% | CH₄ / vol% | C₂H₄ / vol% | Others / vol% |
|---|---|---|---|---|---|---|---|
| Example 6C | Polyethylene pellets | 20.3 | 15.2 | 18.6 | 22.4 | 23.2 | 0.3 |
| | Polypropylene flakes removed from waste food containers | 22.8 | 11.6 | 20.7 | 24.5 | 20 | 0.4 |
| | Poly-1-butene pellets | 28.4 | 18 | 15.1 | 18.3 | 19.6 | 0.6 |
| | Ethylene-vinyl acetate copolymer removed from waste shoe soles | 32.5 | 17.6 | 22.8 | 15.4 | 11.2 | 0.5 |
| Example 7C | Polyethylene pellets | 45.1 | 14.4 | 15.2 | 13.3 | 11.7 | 0.3 |
| | Polypropylene flakes removed from waste food containers | 49.4 | 16.3 | 12.2 | 13.8 | 7.7 | 0.6 |
| | Poly-1-butene pellets | 47.3 | 18 | 14.5 | 12.6 | 7.2 | 0.4 |
| | Ethylene-vinyl acetate copolymer removed from waste shoe soles | 52.8 | 21.3 | 8.9 | 9.8 | 6.4 | 0.8 |

As shown in Table 1C, the final residual rates of carbon-based solid matter (X_{c}) from microwave pyrolysis of polyolefin using the carbon fiber assembly in an atmosphere of a carbon dioxide-containing gas were all less than 3% (Examples 6C and 7C), whereas the X_{c} from microwave pyrolysis of polyolefin using conventional microwave heating material was greater than 15% (Comparative Example 5C). Moreover, the final X_{c} from microwave pyrolysis of polyolefin using the carbon fiber assembly alone in an atmosphere of other than a carbon dioxide-containing gas was greater than 8% (Comparative Example 6C). This demonstrates that microwave pyrolysis of polyolefin using the carbon fiber assembly in an atmosphere of a carbon dioxide-containing gas enables more complete pyrolysis of polyolefin compared to other pyrolysis methods. Additionally, since the carbon fiber assembly obtained in Comparative Example 1 could only reach a temperature of 300°C under microwave irradiation in an atmosphere of carbon dioxide, resulting in minimal pyrolysis of polyolefin, it could be seen that the number of carbon fiber ends contained in each gram of the carbon fiber assembly must be greater or equal to 1×10⁶ in order to achieve effective pyrolysis of polyolefin.

As shown in Table 2C, the gases produced by polyolefin pyrolysis in Examples 6C and 7C, with unreacted carbon dioxide excluded, were mainly composed of carbon monoxide, hydrogen, methane and ethylene, all of which can be used as chemical raw materials or energy fuels after separation. The samples obtained in Examples 2-5 were subjected to the same experiments as described above, yielding similar experimental phenomena and results.

### Examples of simultaneous recycling of VOCs and carbon dioxide using microwave:

The experimental data in the examples were determined using the following instruments and measurement methods:
In the examples, the components of the collected syngas were subjected to chromatographic analysis as follows:
The gaseous product collected after pyrolysis was analyzed using a Refinery Gas Analyzer (HP Agilent 7890A, configured with 3 channels, including 1 FID and 2 TCDs (Thermal Conductivity Detectors)) in accordance with the ASTM D1945-14 method. Hydrocarbons were analyzed on the FID channel. One TCD with nitrogen as the carrier gas was used to determine the hydrogen content, due to the small difference in conductivity between hydrogen and helium carrier gases. The other TCD with helium as the carrier gas was used to detect CO, CO₂, N₂ and O₂. For quantitative analysis, the response factor was determined using RGA (Refinery Gas Analysis) calibration gas standard.

The raw materials used in the examples of the present invention were all commercially available.

VOCs gases were collected from multiple refining and chemical enterprises and mixed with carbon dioxide to prepare five samples with the volume ratios of VOCs to carbon dioxide being 30:70, 40:60, 50:50, 60:40 and 70:30 respectively.

### Example 6D

4 g of the carbon fiber assembly obtained in Example 1 was placed in a quartz jar equipped with vents at its bottom and top respectively, then a mixed gas of VOCs and carbon dioxide was introduced through the bottom vent, and brought into contact the carbon fiber microwave material (i.e., the carbon fiber assembly), before flowing out through the top vent. First, the quartz jar was purged with an atmosphere of pure carbon dioxide to remove the air inside. Subsequently, Sample 1 was introduced at a flow rate of 40 mL/min, in a total quantity of 80 g, and subjected to microwave irradiation using an industrial microwave oven at a power of 700 W. The gaseous products generated from microwave pyrolysis were collected using a gas collection bag, and the gas phase compositions of Sample 1 and its pyrolysis products were analyzed by gas chromatography, as shown in Table 1D.

The volume fraction of carbon dioxide in the pyrolysis product gases of Sample 1 decreased from 50% to 0%, and the other 19 types of VOCs were converted into four substances: methane (19.53 Vol%), ethylene (33.32 Vol%), hydrogen (31.07 Vol%) and carbon monoxide (16.08 Vol%), which greatly reduces the difficulty of recycling and utilization of VOCs.

The carbon fiber assemblies obtained in Examples 2-5 were subjected to the same experiments as described above, yielding similar experimental phenomena and results.

**Table 1D. Gas phase compositions of Sample 1 and its microwave plasma pyrolysis products**

| Component name | Sample 1 volume fraction (Vol%) | Pyrolysis products of Sample 1 volume fraction (Vol%) |
|---|---|---|
| **Carbon dioxide** | **50** | **0** |
| Propylene | 16.44 | 0 |
| Propane | 8.46 | 0 |
| Ethane | 5.82 | 0 |
| Acetone | 3.21 | 0 |
| Isobutane | 3.04 | 0 |
| n-Butane | 2.72 | 0 |
| Isopentane | 2.2 | 0 |
| n-Heptane | 1.96 | 0 |
| Toluene | 1.05 | 0 |
| 1-Butene | 0.97 | 0 |
| **Methane** | **0.75** | **19.53** |
| n-Undecane | 0.72 | 0 |
| 2,2,4-Trimethylpentane | 0.58 | 0 |
| 2-Methylheptane | 0.49 | 0 |
| 3-Methylheptane | 0.49 | 0 |
| n-Dodecane | 0.44 | 0 |
| Cyclopentane | 0.24 | 0 |
| **Ethylene** | **0.22** | **33.32** |
| Trans-2-butene | 0.19 | 0 |
| **Hydrogen** | **0** | **31.07** |
| **Carbon monoxide** | **0** | **16.08** |
| Total | 100 | 100 |

### Example 7D

12 g of the carbon fiber assembly obtained in Example 1 was placed in a U-shaped quartz tube with a tube length of 40 cm, then a mixed gas of VOCs and carbon dioxide was introduced into the U-shaped quartz tube from one end, and brought into contact with the carbon fiber microwave material, before flowing out from the other end. The U-shaped quartz tube loaded with the carbon fiber assembly was placed in an industrial microwave oven. First, the quartz tube was purged with an atmosphere of pure carbon dioxide to remove the air inside. Subsequently, Sample 2 was introduced at a flow rate of 20 mL/min, in a total quantity of 200 g, and subjected to microwave irradiation using an industrial microwave oven at a power of 350 W. The gaseous products generated from microwave pyrolysis were collected using a gas collection bag, and the gas phase compositions of Sample 2 and its pyrolysis products were analyzed by gas chromatography, as shown in Table 2D.

The volume fraction of carbon dioxide in the pyrolysis product gases of Sample 2 decreased from 30% to 0%, and the other 17 types of VOCs were converted into four substances: methane (11.25 Vol%), ethylene (36.61 Vol%), hydrogen (32.44 Vol%) and carbon monoxide (19.7 Vol%).

**Table 2D. Gas phase compositions of Sample 2 and its microwave plasma pyrolysis products**

| Component name | Sample 2 volume fraction (Vol%) | Pyrolysis products of Sample 2 volume fraction (Vol%) |
|---|---|---|
| **Carbon dioxide** | **30.00** | **0** |
| Acetone | 17.23 | 0 |
| n-Butane | 16.04 | 0 |
| Ethane | 6.47 | 0 |
| n-Pentane | 5.73 | 0 |
| Cis-2-butene | 4.95 | 0 |
| **Methane** | **4.88** | **11.25** |
| Cyclopentane | 3.52 | 0 |
| **Ethylene** | **3.51** | **36.61** |
| n-Undecane | 1.36 | 0 |
| m-Xylene | 1.29 | 0 |
| 2,3-Dimethylbutane | 0.91 | 0 |
| **Carbon monoxide** | **0.90** | **19.7** |
| n-Dodecane | 0.83 | 0 |
| Cyclohexane | 0.68 | 0 |
| p-Diethylbenzene | 0.58 | 0 |
| Isobutane | 0.56 | 0 |
| 1-Butene | 0.55 | 0 |
| **Hydrogen** | **0** | **32.44** |
| Total | 100 | 100 |

### Example 8D

This example was carried out under the same conditions as those in Example 6D except for that Sample 1 was replaced with Sample 3, which was introduced at a flow rate of 80 mL/min, in a total quantity of 40 g, and subjected to microwave irradiation using an industrial microwave oven at a power of 1500 W. The gaseous products generated from microwave pyrolysis were collected using a gas collection bag, and the gas phase compositions of Sample 3 and its pyrolysis products were analyzed by gas chromatography, as shown in Table 3D.

The volume fraction of carbon dioxide in the pyrolysis product gases of Sample 3 decreased from 70% to 0%, and the other 22 types of VOCs were converted into four substances: methane (20.78 Vol%), ethylene (20.52 Vol%), hydrogen (23 Vol%) and carbon monoxide (35.7 Vol%).

**Table 3D. Gas phase compositions of Sample 3 and its microwave plasma pyrolysis products**

| Component name | Sample 3 volume fraction (Vol%) | Pyrolysis products of Sample 3 volume fraction (Vol%) |
|---|---|---|
| **Carbon dioxide** | **70.00** | **0** |
| n-Nonane | 6.66 | 0 |
| n-Decane | 3.89 | 0 |
| n-Undecane | 3.75 | 0 |
| n-Dodecane | 3.68 | 0 |
| n-Butane | 2.36 | 0 |
| p-Xylene | 2.03 | 0 |
| n-Hexane | 1.65 | 0 |
| Isobutane | 0.99 | 0 |
| Toluene | 0.83 | 0 |
| 1-Butene | 0.80 | 0 |
| **Hydrogen** | **0.54** | **23** |
| Cyclohexane | 0.47 | 0 |
| 1,2,3-Trimethylbenzene | 0.38 | 0 |
| p-Ethyl toluene | 0.32 | 0 |
| Methyl cyclohexane | 0.29 | 0 |
| 3-Methylpentane | 0.24 | 0 |
| 3-Methylheptane | 0.23 | 0 |
| p-Diethylbenzene | 0.20 | 0 |
| 2,2,4-Trimethylpentane | 0.19 | 0 |
| n-Octane | 0.18 | 0 |
| **Methane** | **0.17** | **20.78** |
| **Carbon monoxide** | **0.16** | **35.7** |
| **Ethylene** | **0.00** | **20.52** |
| Total | 100 | 100 |

### Example 9D

This example was carried out under the same conditions as those in Example 7D except for that Sample 2 was replaced with Sample 4, which was introduced at a flow rate of 60 mL/min, in a total quantity of 150 g, and subjected to microwave irradiation using an industrial microwave oven at a power of 900 W. The gaseous products generated from microwave pyrolysis were collected using a gas collection bag, and the gas phase compositions of Sample 4 and its pyrolysis products were analyzed by gas chromatography, as shown in Table 4D.

The volume fraction of carbon dioxide in the pyrolysis product gases of Sample 4 decreased from 40% to 0%, and the other 19 types of VOCs were converted into four substances: methane (18.69 Vol%), ethylene (30.45 Vol%), hydrogen (30.79 Vol%) and carbon monoxide (20.07 Vol%).

**Table 4D. Gas phase compositions of Sample 4 and its microwave plasma pyrolysis products**

| Component name | Sample 4 volume fraction (Vol%) | Pyrolysis products of Sample 4 volume fraction (Vol%) |
|---|---|---|
| **Carbon dioxide** | **40.00** | **0** |
| Isopentane | 17.96 | 0 |
| Cyclopentane | 7.60 | 0 |
| p-Xylene | 5.62 | 0 |
| n-Butane | 5.26 | 0 |
| Isobutane | 4.44 | 0 |
| o-Xylene | 4.30 | 0 |
| Propane | 3.71 | 0 |
| Acetone | 3.01 | 0 |
| **Methane** | **2.84** | **18.69** |
| **Ethylene** | **0.70** | **30.45** |
| Toluene | 0.65 | 0 |
| n-Pentane | 0.64 | 0 |
| n-Undecane | 0.59 | 0 |
| **Hydrogen** | **0.53** | **30.79** |
| n-Heptane | 0.50 | 0 |
| **Carbon monoxide** | **0.50** | **20.07** |
| m-Diethylbenzene | 0.47 | 0 |
| 2,2,4-Trimethylpentane | 0.35 | 0 |
| Ethylbenzene | 0.33 | 0 |
| Total | 100 | 100 |

### Example 10D

This example was carried out under the same conditions as those in Example 7D except for that Sample 2 was replaced with Sample 5, which was introduced at a flow rate of 120 mL/min, in a total quantity of 240 g, and subjected to microwave irradiation using an industrial microwave oven at a power of 1500 W. The gaseous products generated from microwave pyrolysis were collected using a gas collection bag, and the gas phase compositions of Sample 5 and its pyrolysis products were analyzed by gas chromatography, as shown in Table 5D.

The volume fraction of carbon dioxide in the pyrolysis product gases of Sample 5 decreased from 60% to 0%, and the other 18 types of VOCs were converted into four substances: methane (19.29 Vol%), ethylene (21.78 Vol%), hydrogen (28.05 Vol%) and carbon monoxide (30.88 Vol%).

**Table 5D. Gas phase compositions of Sample 5 and its microwave plasma pyrolysis products**

| Component name | Sample 5 volume fraction (Vol%) | Pyrolysis products of Sample 5 volume fraction (Vol%) |
|---|---|---|
| **Carbon dioxide** | **60.00** | 0 |
| Propane | 12.17 | 0 |
| 2,3-Dimethylbutane | 6.67 | 0 |
| Isopentane | 3.90 | 0 |
| **Methane** | **3.89** | **19.29** |
| Isobutane | 2.98 | 0 |
| **Ethylene** | **2.02** | **21.78** |
| 1-Butene | 1.88 | 0 |
| Isobutene | 1.84 | 0 |
| 2,4-Dimethylpentane | 0.88 | 0 |
| Toluene | 0.65 | 0 |
| n-Butane | 0.57 | 0 |
| n-Pentane | 0.47 | 0 |
| n-Dodecane | 0.33 | 0 |
| p-Xylene | 0.31 | 0 |
| p-Diethylbenzene | 0.29 | 0 |
| 1,3,5-Trimethylbenzene | 0.28 | 0 |
| Cumene | 0.23 | 0 |
| 3-Methylhexane | 0.23 | 0 |
| 2,2,4-Trimethylpentane | 0.22 | 0 |
| **Hydrogen** | **0.20** | **28.05** |
| **Carbon monoxide** | **0.00** | **30.88** |
| Total | 100 | 100 |

The experimental results in Tables 1D-5D demonstrate that carbon dioxide in the samples was fully consumed by treatment with plasma generated by the carbon fiber assembly, and the complex VOCs components were converted into methane, ethylene, hydrogen and carbon monoxide, which greatly reduces the difficulty of recycling and utilization of VOCs.

### Comparative Example 5D

This example was carried out under the same conditions as those in Example 6D except for that the 4 g of the carbon fiber assembly obtained in Example 1 as used in Example 6D was replaced with 4 g of silicon carbide powder. The gaseous products generated from microwave pyrolysis were collected using a gas collection bag, and the gas phase compositions of Sample 1 and its pyrolysis products were analyzed by gas chromatography, as shown in Table 6D.

Since silicon carbide cannot generate microwave plasma and its heating temperature cannot exceed 1000°C, the volume fraction of carbon dioxide was only decreased by 10%. Meanwhile, the VOCs components were increased from 19 types to 25 types, making the VOCs components more complex and difficult to utilize. It is thus evident that the carbon fiber assembly is crucial for achieving the simultaneous and highly efficient recycling and utilization of VOCs and carbon dioxide.

**Table 6D. Gas phase compositions of Sample 1 and its microwave pyrolysis products with silicon carbide**

| Component name | Sample 1 volume fraction (Vol%) | Pyrolysis products of Sample 1 volume fraction (Vol%) |
|---|---|---|
| **Carbon dioxide** | **50** | 40.35 |
| Propylene | 16.44 | 18.75 |
| Propane | 8.46 | 8.82 |
| Ethane | 5.82 | 9.33 |
| Acetone | 3.21 | 2.30 |
| Isobutane | 3.04 | 2.31 |
| n-Butane | 2.72 | 2.04 |
| Isopentane | 2.2 | 1.83 |
| n-Heptane | 1.96 | 1.10 |
| Toluene | 1.05 | 0.23 |
| 1-Butene | 0.97 | 0.61 |
| **Methane** | **0.75** | 0.74 |
| n-Undecane | 0.72 | 0.54 |
| 2,2,4-Trimethylpentane | 0.58 | 0.55 |
| 2-Methylheptane | 0.49 | 0.13 |
| 3-Methylheptane | 0.49 | 0.40 |
| n-Dodecane | 0.44 | 0.02 |
| Cyclopentane | 0.24 | 0.09 |
| **Ethylene** | **0.22** | 0.21 |
| Trans-2-butene | 0.19 | 0.27 |
| **Hydrogen** | **0** | 2.48 |
| **Carbon monoxide** | **0** | 2.85 |
| Cis-2-butene | 0 | 0.46 |
| Cyclopentane | 0 | 0.96 |
| n-Hexane | 0 | 1.37 |
| 1-Pentene | 0 | 1.26 |
| Total | 100 | 100 |

### Comparative Example 6D

This example was carried out under the same conditions as those in Example 6D except for that the 50 vol% of carbon dioxide in Sample 1 of Example 6D was replaced with 50 vol% of nitrogen. During the pyrolysis process, the absence of microwave plasma generated from carbon dioxide to consume the amorphous carbon formed by VOCs at high temperatures caused the amorphous carbon to gradually wrap and adhere the carbon fiber ends together. This led to a rapid reduction in the number of carbon fiber ends capable of generating plasma, ultimately resulting in the inactivation of the carbon fiber assembly. It is thus evident that the addition of carbon dioxide is crucial for stabilizing the microwave pyrolysis system.

### Comparative Example 7D

This example was carried out under the same conditions as those in Example 6D except for that the 4 g of the carbon fiber assembly obtained in Example 1 as used in Example 6D was replaced with 4 g of the carbon fiber assembly obtained in Comparative Example 1. The gaseous products generated from microwave pyrolysis were collected using a gas collection bag, and the gas phase compositions of Sample 1 and its pyrolysis products were analyzed by gas chromatography, as shown in Table 7D.

Since the carbon fiber assembly obtained in Comparative Example 1 could only reach a temperature of 300°C under microwave irradiation in an atmosphere of carbon dioxide, causing a failure in the reaction of carbon dioxide and VOCs, there were no changes in the products before and after pyrolysis as shown in Table 7D. It could be seen that the number of carbon fiber ends contained in each gram of the carbon fiber assembly must be greater or equal to 1×10⁶ in order to achieve the effect of treating VOCs and carbon dioxide.

**Table 7D. Gas phase compositions of Sample 1 and its microwave pyrolysis products with the carbon fiber assembly of Comparative Example 1**

| Component name | Sample 1 volume fraction (Vol%) | Pyrolysis products of Sample 1 volume fraction (Vol%) |
|---|---|---|
| **Carbon dioxide** | **50** | **49.90** |
| Propylene | 16.44 | 16.33 |
| Propane | 8.46 | 8.67 |
| Ethane | 5.82 | 5.99 |
| Acetone | 3.21 | 3.38 |
| Isobutane | 3.04 | 3.02 |
| n-Butane | 2.72 | 2.92 |
| Isopentane | 2.2 | 1.95 |
| n-Heptane | 1.96 | 2.12 |
| Toluene | 1.05 | 0.94 |
| 1-Butene | 0.97 | 0.79 |
| **Methane** | **0.75** | **0.58** |
| n-Undecane | 0.72 | 0.78 |
| 2,2,4-Timethylpentane | 0.58 | 0.51 |
| 2-Methylheptane | 0.49 | 0.45 |
| 3-Methylheptane | 0.49 | 0.47 |
| n-Dodecane | 0.44 | 0.47 |
| Cyclopentane | 0.24 | 0.26 |
| **Ethylene** | **0.22** | **0.23** |
| Trans-2-butene | 0.19 | 0.24 |
| Total | 100 | 100 |

It should be noted that the examples described above are merely used to explain the present invention and do not constitute any limitation thereto. The present invention has been described with reference to typical examples, but it should be understood that the terms used therein are descriptive and explanatory rather than restrictive. Modifications may be made to the present invention within the scope of the claims as defined, and revisions may be made thereto without departing from the scope and spirit of the present invention. Although the present invention described herein relates to specific methods, materials and examples, it is not intended that the present invention be limited to the specific examples disclosed therein; on the contrary, the present invention may extend to all other methods and applications having the same functions.

All publications, patent applications, patents and other references mentioned in the present specification are incorporated herein by reference in their entirety. Unless otherwise defined, all technical and scientific terms used in the present specification have the meanings commonly understood by those skilled in the art. In case of conflict, the definitions in the present specification shall prevail.

When materials, substances, methods, steps, devices, components or the like are referred to in the present specification with the introductory phrases "well known to those skilled in the art", "prior art" or similar expressions, the objects referred to by such introductory phrases include those conventionally used in the art at the time of filing of the present application, and also include those that are not commonly used at present but will be recognized in the art as suitable for similar purposes.

The endpoints of ranges and any values disclosed herein are not to be limited to the precise ranges or values, which are to be understood to encompass values close to those ranges or values. For numerical ranges, the endpoints of each range, the endpoints of each range and the individual point values, as well as the individual point values may be combined with each other to yield one or more new numerical ranges, which numerical ranges should be deemed to be specifically disclosed herein. In the context, the various technical solutions may in principle be combined with each other to derive new technical solutions, which shall also be deemed to be specifically disclosed herein.

In the context of the present specification, except for those explicitly stated, all matters or issues not mentioned herein shall be directly applied in accordance with those known in the art without any modification.

Furthermore, any embodiment described herein may be freely combined with one or more other embodiments described herein, and the resulting technical solutions or ideas are considered as part of the original disclosure or original record of the present invention, and should not be regarded as new content that has not been disclosed or contemplated herein, unless those skilled in the art consider the combination to be clearly unreasonable.

## Claims

1. A carbon fiber assembly, which comprises a plurality of carbon fiber basic units arranged in a non-oriented manner, wherein the carbon fiber basic units comprise a carbon fiber bundle formed by a plurality of carbon fibers and optionally single carbon fibers; the carbon fiber bundle is a carbon fiber tow that is fixed together; at least one fixed node is arranged on the carbon fiber tow;
taking the two ends of each carbon fiber in the length direction as carbon fiber ends, the number of carbon fiber ends contained in each gram of the carbon fiber assembly is greater than or equal to 1×10⁶ in terms of the number of carbon fiber ends.

2. The carbon fiber assembly as claimed in claim 1, **characterized in that**:
the carbon fiber assembly presents a two-dimensional or three-dimensional spatial structure; and/or,
at least part of two or more adjacent carbon fiber basic units are in contact with each other; and/or,
the number of carbon fiber ends contained in each gram of the carbon fiber assembly is 1×10⁶ to 6×10⁸, preferably 1×10⁶ to 6×10⁷, more preferably 1×10⁶ to 2×10⁷ in terms of the number of carbon fiber ends.

3. The carbon fiber assembly as claimed in claim 1, **characterized in that**:
when there is only one fixed node on the carbon fiber tow, the length of the carbon fiber tow is 0.1 to 30 mm, preferably 1 to 20 mm, more preferably 3 to 20 mm;
when there are two or more fixed nodes on the carbon fiber tow, the distance between adjacent fixed nodes is 1 to 50 mm, preferably 2 to 30 mm, more preferably 5 to 20 mm; and a part of the carbon fiber tow between adjacent fixed nodes is in a broken state; and/or,
the fixing includes binding and/or knotting, and the fixed nodes include bound nodes and/or knotted nodes; preferably, the knotting is performed by knotting the carbon fiber tow itself; and/or the binding material for binding is carbon fiber tow.

4. The carbon fiber assembly as claimed in claim 3, **characterized in that**:
the carbon fiber tow, the carbon fiber tow for binding, and the carbon fiber tow for knotting are independently selected from at least one of the following types of carbon fiber tows: T300, T700, T800, T1000, T1100, M40, M50, M60; preferably selected from at least one of the following types of carbon fiber tows: T300, T700, T800; more preferably selected from at least one of the following types of carbon fiber tows: T300, T700.

5. The carbon fiber assembly as claimed in claim 4, **characterized in that**:
the number of carbon fibers contained in each carbon fiber tow is 1K to 48K, preferably 1K, 3K, 6K, 12K, 24K, 48K; more preferably 12K, 24K.

6. The carbon fiber assembly as claimed in any one of claims 1-5, **characterized in that**:
the carbon fiber basic units are the carbon fiber bundle formed by a plurality of carbon fibers, or the carbon fiber basic unit includes both single carbon fibers and carbon fiber bundle; preferably,
when the carbon fiber basic unit includes both single carbon fibers and carbon fiber bundle, based on the total mass of the carbon fiber assembly being 100 wt%, the content of carbon fiber bundle in the carbon fiber assembly is 0.1 to 99.9 wt%, preferably 1 to 99 wt%; and/or
the length of each single carbon fiber is 0.1 to 30 mm, preferably 1 to 20 mm, more preferably 3 to 20 mm.

7. A preparation method of the carbon fiber assembly as claimed in any one of claims 1-6, comprising:
assembling the carbon fiber bundle and optionally the single carbon fibers in a non-oriented arrangement to obtain the carbon fiber assembly; wherein the preparation method of the carbon fiber bundle includes fixing the carbon fiber tow together and arranging at least one fixed node on the carbon fiber tow, and when there are two or more fixed nodes on the carbon fiber tow, partially or completely breaking the carbon fiber tow between adjacent fixed nodes.

8. The preparation method as claimed in claim 7, **characterized in that**:
the fixing includes binding and/or knotting; and/or
the breaking includes cutting and/or shearing; preferably,
when there is only one fixed node on the carbon fiber tow, the length of the carbon fiber tow is 0.1-30 mm, preferably 1-20 mm, more preferably 3-20 mm; and/or,
when there are two or more fixed nodes on the carbon fiber tow, the distance between adjacent fixed nodes is 1-50 mm, preferably 2-30 mm, more preferably 5-20 mm; and/or,
the fixed nodes include bound nodes and/or knotted nodes; preferably, the knotting is performed by knotting the carbon fiber tow itself; and/or the binding is performed using carbon fiber tow.

9. A material for microwave irradiation heating, which comprises the carbon fiber assembly as claimed in any one of claims 1-6 or the carbon fiber assembly prepared by the preparation method as claimed in any one of claims 7-8; preferably,
under microwave irradiation of 300 W or above, the temperature of the material for microwave irradiation heating can reach 1000 °C or higher.

10. A use of the carbon fiber assembly as claimed in any one of claims 1-6 or the carbon fiber assembly prepared by the preparation method as claimed in any one of claims 7-8 as a heating material in a microwave field under microwave irradiation; preferably,
the power of the microwave irradiation is more than 300 W, preferably 300 to 2000 W, more preferably 500 to 1500 W, further preferably 700 to 1200 W; and/or
the microwave irradiation is carried out in an oxygen-free atmosphere.

11. A use of the carbon fiber assembly as claimed in any one of claims 1-6 or the carbon fiber assembly prepared by the preparation method as claimed in any one of claims 7-8 in a microwave field, including microwave heating pyrolysis of an organic material and preparation of syngas using carbon dioxide in a microwave field; preferably, the organic material includes one or more of plastics, biomass, and volatile organic compounds.

12. A method for preparing syngas using carbon dioxide, comprising, in a microwave field and in the presence of the carbon fiber assembly as claimed in any one of claims 1-6 or the carbon fiber assembly prepared by the preparation method as claimed in any one of claims 7-8 or the material for microwave irradiation heating as claimed in claim 9:
carrying out Reaction 1: contacting the carbon fiber assembly, carbon dioxide and graphite to carry out the reaction to obtain carbon monoxide; or,
carrying out Reaction 2: contacting the carbon fiber assembly, carbon dioxide, water vapor and graphite to carry out the reaction to obtain carbon monoxide and hydrogen.

13. The method as claimed in claim 12, **characterized in that**:
for Reaction 1:
the mass ratio of the carbon fiber assembly to graphite is (100:1) to (1:100), preferably (20:1) to (1:20), and more preferably (10:1) to (1:10); and/or,
the microwave power is more than 300 W, preferably 300 to 2000 W, more preferably 500 to 1500 W, and further preferably 700 to 1200 W; and/or,
the microwave irradiation time is 0.1 to 200 min, preferably 0.5 to 150 min, and most preferably 1 to 100 min.

14. The method as claimed in claim 12, **characterized in that**:
for Reaction 2:
the mass ratio of the carbon fiber assembly to graphite is (100:1) to (1:100), preferably (1:1) to (1:20), and more preferably (1:1) to (1:10); and/or,
the volume ratio of carbon dioxide to water vapor is (99.9:0.1) to (10:90), and further preferably (98:2) to (20:80); and/or,
the microwave power is more than 300 W, preferably 300 to 2000 W, more preferably 500 to 1500 W, and further preferably 700 to 1200 W; and/or,
the microwave irradiation time is 0.1 to 200 min, preferably 0.5 to 150 min, and most preferably 1 to 100 min.

15. The method as claimed in any one of claims 12-14, **characterized in that** it comprises the following steps:
a. placing a carbon fiber assembly and graphite in a sealable reaction vessel, wherein the reaction vessel is made of a microwave-transparent material;
b. introducing carbon dioxide into the reaction vessel, or introducing a mixed gas of carbon dioxide and water vapor into the reaction vessel;
c. activating the microwave, placing the reaction vessel in a microwave field to carry out the reaction to obtain a gaseous product, and collecting the gaseous product;
preferably,
the graphite is derived from waste graphite, and more preferably from graphite recovered from waste lithium batteries; and/or,
the atmosphere for microwave irradiation optionally further contains nitrogen and/or an inert gas.

16. A method for simultaneously recycling biomass and carbon dioxide using microwave, comprising:
contacting the biomass with a carbon fiber assembly, applying microwave to the biomass and carbon fiber assembly in the atmosphere of a carbon dioxide-containing gas, and reacting the biomass and carbon dioxide to convert into a gaseous product with carbon monoxide as the main component;
the carbon fiber assembly is the carbon fiber assembly as claimed in any one of claims 1-6 or the carbon fiber assembly prepared by the preparation method as claimed in any one of claims 7-8.

17. The method as claimed in claim 16, **characterized in that**:
the weight ratio of the biomass to the carbon fiber assembly is (1:100) to (100:1), preferably (1:50) to (50:1), and more preferably (1:20) to (20:1).

18. The method as claimed in claim 16 or 17, **characterized in that**:
the carbon dioxide-containing gas comprises pure carbon dioxide gas or a carbon dioxide-containing mixed gas; preferably,
the carbon dioxide-containing mixed gas is a mixed gas of carbon dioxide with nitrogen and/or an inert gas and/or water vapor; more preferably, the inert gas is at least one of argon and helium; and/or,
the volume fraction of carbon dioxide in the carbon dioxide-containing mixed gas is 5% to 99.9%, preferably 10% to 99.9%, and most preferably 20% to 99.9%.

19. The method as claimed in any one of claims 16-18, **characterized in that**:
the power of the microwave is 1 W to 100 kW, preferably 200 W to 50 kW, and most preferably 500 W to 20 kW; and/or,
the microwave irradiation time is 0.1 to 200 min, preferably 0.5 to 150 min, and most preferably 1 to 100 min; and/or,
the temperature of the carbon fiber assembly exceeds 1000°C, causing the pyrolysis of biomass.

20. The method as claimed in any one of claims 16-19, **characterized in that**:
the contact mode between the biomass and the carbon fiber assembly includes one or a combination of more than one of the following: placing the biomass on the carbon fiber assembly, placing the biomass in a cavity formed by the carbon fiber assembly, covering the biomass with the carbon fiber assembly, and blending the biomass with the carbon fiber assembly.

21. The method as claimed in any one of claims 16-20, **characterized in that**:
the biomass is various animals, plants and/or algae produced by photosynthesis, each containing cellulose, hemicellulose and lignin; preferably,
the biomass is at least one of straw, bagasse, branches, leaves, wood chips, rice husks, rice straw, peanut shells, coconut shells, palm seed shells, and corn cobs.

22. The method as claimed in any one of claims 16-21, **characterized in that** it comprises the following steps:
a. dehydrating the biomass;
b. placing the dehydrated biomass and the carbon fiber assembly in a sealable reaction vessel, wherein the reaction vessel is made of a microwave-transparent material;
c. introducing a carbon dioxide-containing gas into the reaction vessel to displace air;
d. activating the microwave, placing the reaction vessel in a microwave field to carry out the reaction, and collecting the gaseous product generated by the reaction.

23. A method for simultaneously recycling polyolefin and carbon dioxide using microwave, comprising:
contacting the polyolefin with a carbon fiber assembly, applying microwave to the polyolefin and carbon fiber assembly in the atmosphere of a carbon dioxide-containing gas, and reacting the polyolefin and carbon dioxide to convert into a gaseous product with carbon monoxide as the main component;
the carbon fiber assembly is the carbon fiber assembly as claimed in any one of claims 1-6 or the carbon fiber assembly prepared by the preparation method as claimed in any one of claims 7-8.

24. The method as claimed in claim 23, **characterized in that**:
the weight ratio of the polyolefin to the carbon fiber assembly is (1:100) to (100:1), preferably (1:50) to (50:1), and more preferably (1:30) to (30:1).

25. The method as claimed in claim 23 or 24, **characterized in that**:
the carbon dioxide-containing gas comprises pure carbon dioxide gas or a carbon dioxide-containing mixed gas; preferably,
the carbon dioxide-containing mixed gas is a mixed gas of carbon dioxide with nitrogen and/or an inert gas and/or water vapor; more preferably, the inert gas is at least one of argon and helium; and/or,
the volume fraction of carbon dioxide in the carbon dioxide-containing mixed gas is 5% to 99.9%, preferably 10% to 99.9%, and most preferably 20% to 99.9%.

26. The method as claimed in any one of claims 23-25, **characterized in that**:
the power of the microwave is 1 W to 100 kW, preferably 200 W to 50 kW, and most preferably 500 W to 20 kW; and/or,
the microwave irradiation time is 0.1 to 200 min, preferably 0.5 to 150 min, and most preferably 1 to 100 min; and/or,
the temperature of the carbon fiber assembly exceeds 1000°C, causing the pyrolysis of polyolefin.

27. The method as claimed in any one of claims 23-26, **characterized in that**:
the contact mode between the polyolefin and the carbon fiber assembly includes one or a combination of more than one of the following: placing the polyolefin on the carbon fiber assembly, placing the polyolefin in a cavity formed by the carbon fiber assembly, covering the polyolefin with the carbon fiber assembly, and blending the polyolefin with the carbon fiber assembly.

28. The method as claimed in any one of claims 23-27, **characterized in that**:
the polyolefin is a polyolefin prepared by homopolymerization or copolymerization of at least one monomer selected from ethylene, propylene, butene, α-olefin, cycloolefin, 4-methyl-1-pentene, and acrylic acid, as well as a mixture of the aforementioned polyolefins; preferably,
the polyolefin is at least one of polyethylene, polypropylene, poly-1-butene, ethylene-vinyl acetate copolymer, polyolefin elastomer, cycloolefin homopolymer/copolymer, poly-4-methyl-1-pentene, ethylene-vinyl alcohol copolymer, and ethylene-acrylic acid copolymer.

29. The method as claimed in any one of claims 23-28, **characterized in that** it comprises the following steps:
a. subjecting the polyolefin to small molecule removal treatment;
b. placing the treated polyolefin and the carbon fiber assembly in a sealable reaction vessel, wherein the reaction vessel is made of a microwave-transparent material;
c. introducing a carbon dioxide-containing gas into the reaction vessel to displace air;
d. activating the microwave, placing the reaction vessel in a microwave field to carry out the reaction, and collecting the gaseous product generated by the reaction.

30. A method for simultaneously recycling VOCs and carbon dioxide using microwave, comprising:
contacting a mixed gas containing carbon dioxide and VOCs with a carbon fiber assembly, and under the condition of applying microwave to the carbon fiber assembly, reacting the VOCs and carbon dioxide to convert into pyrolysis gas;
the carbon fiber assembly is the carbon fiber assembly as claimed in any one of claims 1-6 or the carbon fiber assembly prepared by the preparation method as claimed in any one of claims 7-8.

31. The method as claimed in claim 30, **characterized in that**:
in the mixed gas containing carbon dioxide and VOCs, based on the total volume of VOCs and carbon dioxide being 100%, the content of VOCs is 10% to 90%, preferably 20% to 80%, and more preferably 30% to 70%; and/or,
the amount of the carbon fiber assembly is ≥ 1% of the total mass of the mixed gas containing carbon dioxide and VOCs to be treated, preferably ≥ 3%, and more preferably ≥ 5%; and/or,
the pyrolysis gas contains methane, ethylene, hydrogen and carbon monoxide.

32. The method as claimed in claim 30 or 31, **characterized in that**:
the power of the microwave is 1 W to 100 kW, preferably 200 W to 50 kW, and most preferably 500 W to 20 kW; and/or,
the microwave irradiation time is 0.1 to 200 min, preferably 0.5 to 150 min, and most preferably 1 to 100 min; and/or,
the temperature of the carbon fiber assembly exceeds 1000°C, causing the pyrolysis of VOCs.

33. The method as claimed in any one of claims 30-32, **characterized in that**:
the contact mode between the mixed gas containing carbon dioxide and VOCs and the carbon fiber assembly includes: introducing carbon dioxide and VOCs into the reactor through the pores of the carbon fiber assembly separately or simultaneously; preferably,
introducing carbon dioxide and VOCs from the bottom of the carbon fiber assembly separately or simultaneously, or placing the carbon fiber assembly in a U-shaped vessel and introducing carbon dioxide and VOCs from one end of the U-shaped vessel separately or simultaneously.

34. The method as claimed in any one of claims 30-33, **characterized in that**:
the VOCs refer to organic compounds with a boiling point lower than 260°C under standard atmospheric pressure; preferably, the VOCs include one or more of 2-methylpentane, hydrogen, n-hexane, 2,2,4-trimethylpentane, n-heptane, 2,3,4-trimethylpentane, methylcyclohexane, n-octane, n-nonane, n-decane, propane, isobutane, isobutene, n-butane, cyclopentane, isopentane, n-pentane, ethane, n-undecane, n-dodecane, methylcyclopentane, 3-methylpentane, 3-methylhexane, 2-methylhexane, 2,4-dimethylpentane, 2,2-dimethylbutane, 2,3-dimethylbutane, cyclohexane, 2-methylheptane, 3-methylheptane, 2,3-dimethylpentane, propylene, trans-2-butene, 1-butene, cis-2-butene, 1-pentene, cis-2-pentene, ethylene, acetylene, benzene, ethylbenzene, o-xylene, m-xylene, p-xylene, methane, toluene, m-ethyltoluene, p-ethyltoluene, o-ethyltoluene, styrene, cumene, n-propylbenzene, 1,3,5-trimethylbenzene, 1,2,4-trimethylbenzene, 1,2,3-trimethylbenzene, m-diethylbenzene, p-diethylbenzene, acetone, 1,3-butadiene and carbon monoxide.

35. The method as claimed in any one of claims 30-34, **characterized in that** it comprises the following steps:
a. placing a carbon fiber assembly in a sealable reaction vessel, wherein the reaction vessel is made of a microwave-transparent material;
b. introducing carbon dioxide into the reaction vessel to displace air, and then introducing a mixed gas containing carbon dioxide and VOCs;
c. activating the microwave, placing the reaction vessel in a microwave field to carry out the reaction, and collecting the gaseous product generated by the reaction.
